# EUROPÄISCHE PATENTSCHRIFT

(11) **EP 1 161 499 B1**
(45) Veröffentlichungstag und Bekanntmachung des Hinweises auf die Patenterteilung: **03.12.2003**
(21) Anmeldenummer: 00912518.8
(22) Anmeldetag: 28.02.2000
(51) Int. Cl.: C09B 43/10, C09B 45/28, C09B 43/44

(54) **AZOXYFARBSTOFFE UND DEREN CU-KOMPLEXE**
AZOXY DYES AND THEIR CU COMPLEXES
COLORANTS AZOXY ET LEURS COMPLEXES DE CU

(30) Priorität: 13.03.1999 DE 19911267
(43) Veröffentlichungstag der Anmeldung: 12.12.2001
(73) Patentinhaber: BASF AKTIENGESELLSCHAFT, 67056 Ludwigshafen (DE)
(72) Erfinder: TRESCH, Rainer, D-67133 Maxdorf (DE); ETZBACH, Karl-Heinz, D-67227 Frankenthal (DE); SENS, Rüdiger, D-67069 Ludwigshafen (DE); KRÄH, Claudia, D-67112 Mutterstadt (DE)
(86) Internationale Anmeldenummer: EP0001636
(87) Internationale Veröffentlichungsnummer: WO00055259

(56) Entgegenhaltungen:
- EP-A- 0 051 785
- EP-A- 0 648 814
- CH-A- 172 368
- US-A- 2 203 196

## Beschreibung

Die vorliegende Erfindung betrifft neue Azoxyfarbstoffe der allgemeinen Formel I in Form der freien Säure 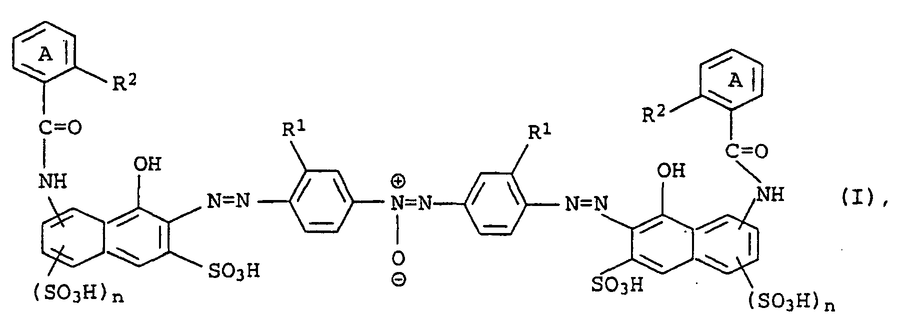 in der
- n: 0 oder 1
- R¹: Methoxy, Hydroxyl und Carboxyl
- R²: Carboxyl, Amino, C₁-C₄-Alkylamino, Allylamino, Benzylamino und Methoxycarbonylmethylamino bedeuten und die Phenylringe A außerdem mit C₁-C₈-Alkyl, Phenyl, das mit Methyl oder Halogen substituiert sein kann, Hydroxyl, Amino, Nitro, Halogen, Carboxyl, N-Benzylcarbamoyl, unsubstituiertes oder mit Nitro, Halogen, C₁-C₄-Alkoxy, Acetoxy substituiertes Phenylcarbamoyl und Naphthylcarbamoyl substituiert sein können oder benzanelliert sein können,
ihre Cu-Komplexe, ein Verfahren zur Herstellung der Cu-Komplexfarbstoffe, Azoxyfarbstoffe der Formel I in ihrer teilweise oder völlig entacylierten Form, deren Cu-Komplexe, Färbemittel enthaltend diese Azoxyfarbstoffe und/oder ihre Cu-Komplexe sowie ihre Verwendung zum Färben und Bedrucken von natürlichen oder synthetischen Substraten.

Die CH-A-193 343, CH-A-196 252, CH-A-196 259, CH-A-196 260, CH-A-196 264, DE-A-26 51 369, EP-A-648 814 und die EP-A-43 792 beschreiben Azoxyfarbstoffe mit verschiedenen Hydroxyaminonaphthalinsulfonsäuren sowie ihre Kupferkomplexe.

Die US 2,203,196 gibt einen Farbstoff der Formel 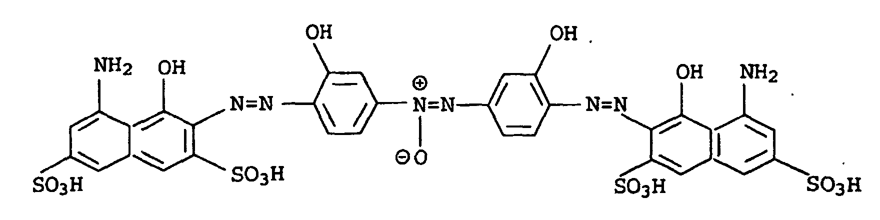 an. Die Nacharbeitung dieses Beispiels zeigt jedoch, dass sich der Farbstoff über die beschriebene Syntheseroute nicht bildet.

Die DE-A-28 44 597 lehrt ein Verfahren zur Herstellung von kupferhaltigen Azoxyfarbstoffen deren Kupplungskomponente eine 4-Hydroxy-6-sulfophenylaminonaphthalin-2-sulfonsäure ist.

Die EP-A-51785 lehrt einen kupferhaltigen Azoxyfarbstoff mit Acetylrest, der aus dem bereits komplexierten Monoazofarbstoff zum Azoxyfarbstoff umgesetzt wird.

Die CH-A-172368 lehrt einen Farbstoff, der aus 5-Nitro-2-aminobenzoesäure und 1-Amino-8-hydroxynaphthalin-3,6-disulfonsäure erhalten wird.

Die Farbstoffe des Standes der Technik sind trüb und ergeben vielfach ungleiche Färbungen.

Daher war es Aufgabe der vorliegenden Erfindung Farbstoffe zur Verfügung zu stellen, die die obengenannten Nachteile nicht aufweisen und gute anwendungstechnische Eigenschaften haben.

Demgemäß wurden die eingangs näher bezeichneten Farbstoffe sowie ihre Kupferkomplexe gefunden.

Alle in der obengenannten Formel auftretenden Alkylreste können sowohl geradkettig als auch verzweigt sein.

Wenn die Phenylringe A außerdem substituiert sind, so können sie jeweils 1, 2, 3 oder 4 bevorzugt 1 oder 2 Substituenten tragen, die unterschiedlich sein können.

Reste Halogen sind Fluor, Chlor, Brom und Iod.

Reste R² sind z.B. Methylamino, Ethylamino, Propylamino, Isopropylamino, Butylamino, Isobutylamino, sec.-Butylamino und tert.-Butylamino.

Als Substituenten für die Phenylringe A seien z.B. Methyl, Ethyl, Propyl, Isopropyl, Butyl, sec.-Butyl, tert.-Butyl, Pentyl, Hexyl, Heptyl, Octyl, 2-, 3- oder 4-Bromphenyl, 2-, 3- oder 4-Methylphenyl, 2-, 3- oder 4-Nitrophenylcarbamoyl, 2-, 3- oder 4-Methoxyphenylcarbamoyl, 2-Methoxy-4-nitro- und 2-Methoxy-5-nitrophenylcarbamoyl, 2-, 3- oder 4-Ethoxyphenylcarbamoyl und 2-, 3- oder 4-Acetoxyphenylcarbamoyl genannt.

In der Beschreibung und in den Ansprüchen sind die Farbstoffe der Formeln I, VI, VII, VIII und IX in Form der freien Säuren dargestellt, vorzugsweise liegen sie jedoch als Salze, insbesondere Alkalisalze, vor bzw. werden sie als Salze bei der Herstellung abgeschieden. Die formelmässige Darstellung als freie Säure ist deshalb, wie in der Farbstoffliteratur üblich, als mit der Darstellung als Salz gleichbedeutend anzusehen.

Hierbei geeignete Kationen leiten sich von Metall- oder Ammoniumionen ab. Metallionen sind insbesondere die Lithium-, Natriumoder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen beispielsweise Diethanolammonium oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 oder 2 Hydroxygruppen substituiert und/oder durch 1 bis 4 Sauerstoffatomen in Etherfunktion unterbrochen sein kann.

Zur Herstellung der Farbstoffe kann man eine Aminohydroxynaphthalinsulfonsäure der Formel II 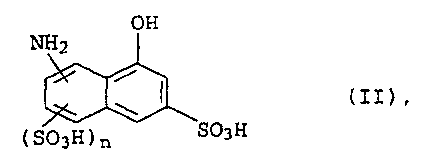 in der n 0 oder 1 bedeutet, durch Umsetzen mit einem Anhydrid der Formel III 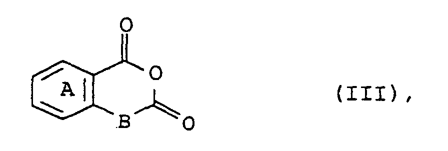 in der B für eine einfache Bindung oder Imino, C₁-C₄-Alkylimino, oder Phenylimino steht und A die obengenannte Bedeutung hat, im schwach alkalischen Medium zu einer Kupplungskomponente der Formel IV 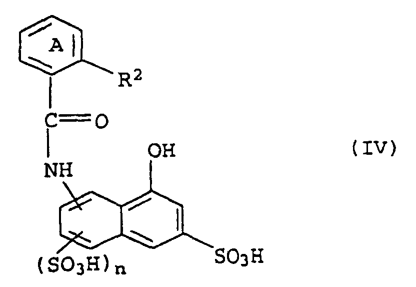 umsetzen. Auf diese Kupplungskomponente kann man Nitroaniline der Formel V 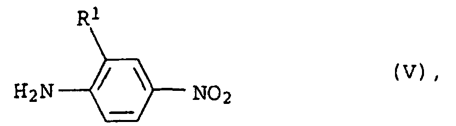 in der R¹ die obengenannte Bedeutung hat, als Diazokomponente auf bekannte Weise kuppeln und anschließend zwei entstandene Nitromonoazofarbstoffe durch Reduktion über eine Azoxybrücke zu den erfindungsgemäßen Farbstoffen verknüpfen.

Als Reduktionsmittel werden vorzugsweise reduzierende Zucker, z.B. D-Glucose, in wässriger alkalischer Lösung verwendet. Die Lösung kann beispielsweise mittels eines Alkalimetallhydroxyds wie Natriumhydroxyd oder Lithiumhydroxyd alkalisch gemacht werden. Solche Reduktionen sind allgemein bekannt und beispielsweise in der EP-A-43 792 beschrieben. Darüberhinaus ist auch eine Reduktion mit üblichen Reduktionsmitteln wie Aldehyde z.B. Formaldehyd oder Hydrazinhydrat möglich.

Geeignete Aminohydroxynaphthalinsulfonsäuren II sind beispielsweise 1-Amino-8-hydroxynaphthalin-4,6-disulfonsäure, 2-Amino-8-hydroxynaphthalin-6-sulfonsäure, 3-Amino-8-hydroxynaphthalin-6-sulfonsäure, 4-Amino-8-hydroxynaphthalin-6-sulfonsäure und besonders bevorzugt 1-Amino-8-hydroxynaphthalin-3,6-disulfonsäure.

Als Anhydride III seien beispielhaft
- Phthalsäureanhydride wie Phthalsäureanhydrid, 3-Methyl-, 4-Methyl-, 3,6-Dimethyl-, 4-tert.-Butyl-, 3,4,5,6-Tetramethyl-, 3-o-Tolyl-, 3,6-Diphenyl-, 3-Hydroxy-, 4-Carboxy-, 3-Amino-, 3-Nitro-, 4-Nitro-4-(2,4-dichlorphenyl)carbamoyl-, 4-(3,4-Dichlorphenyl)carbamoyl-, 4-(2-Methoxy-5-chlorphenyl)carbamoyl-, 4-(3-Nitrophenyl)carbamoyl-, 4-(2-Methoxy-4-nitrophenyl)carbamoyl-, 4-(2-Methoxy-5-nitrophenyl)carbamoyl-, 4-(4-Acetamidophenyl)carbamoyl-, 4-(2-Ethoxyphenyl)carbamoyl-, 4-Naphthylcarbamoyl-, 4-Benzylcarbamoyl-, 3-Fluor-, 4-Fluor-, 3,4,5,6-Tetrafluor-, 3,6-Difluor-, 3,4-Difluor-, 3-Chlor-, 4-Chlor-, 3,6-Dichlor-, 4,5-Dichlor-, 3,4,5,6-Tetrachlor-, 4-Brom-, 3,4,5,6-Tetrabrom-, 3,4,5,6-Tetraiod- und 3-(4-Brom)phenylphthalsäureanhydrid,
- Isatosäureanhydride wie Isatosäureanhydrid, 6-Methyl-, 6-Hydroxy-, 5-Hydroxy-, 4-Carboxy-, 4-Nitro-, 5-Nitro-, 5-Amino-, 6-Fluor-, 5-Chlor-, 6-Chlor-, 3,5-Dichlor-, 5-Brom-, N-Methyl-, N-Ethyl-, N-Benzyl-, N-Allyl-, N-Methyl-5-nitro-, N-Methyl-5-chlor-, N-Methyl-6-chlor- und N-Methoxycarbamoylmethylisatosäureanhydrid sowie
- Naphthalin-1,2-dicarbonsäure- und Naphthalin-2,3-dicarbonsäureanhydrid genannt.

Die vorliegende Erfindung betrifft weiterhin Cu-Komplexfarbstoffe und ihre Mischungen, die erhältlich sind, indem man Farbstoffe I mit mindestens 0,1 Moläquivalent eines kupferabgebenden Mittels umsetzt. Bevorzugt setzt man 0,1 - 2 Mol eines kupferabgebenden Mittels pro Mol Farbstoff ein. Mengen oberhalb 2 Moläquivalent sind möglich, haben jedoch keinen Einfluß auf das Produkt. Bei nicht vollständiger Bildung der 2:1-Komplexe, also bei < 2 Moläquivalenten der kupferabgebenden Mittel erhält man Mischungen der unkomplexierten, 1-fach Cu-komplexierten und 2-fach Cu-komplexierten Farbstoffe.

Die Cu-Komplexfarbstoffe gehorchen der allgemeinen Formel VI in Form der freien Säure 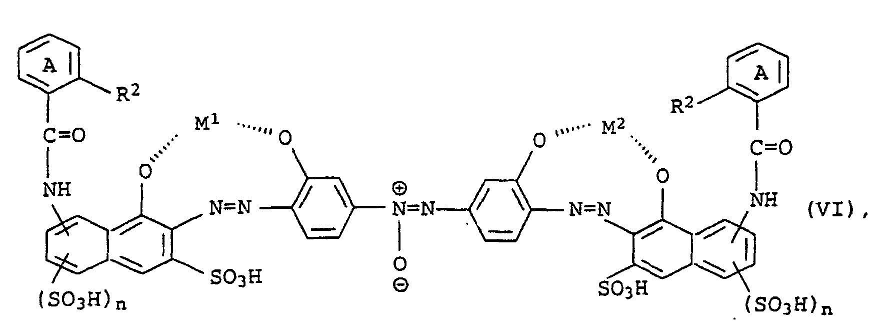 in der mindestens einer der Reste M¹ und M² für Kupfer(II) und der andere Rest gegebenenfalls für Wasserstoff und Methyl steht und n, R² und A die obengenannte Bedeutung haben. Wenn M¹ oder M² für Wasserstoff und Methyl stehen, bildet der Methylrest die Methoxygruppe des Phenylrings und der Wasserstoff die Hydroxylgruppe des Naphthalingerüsts.

Cu-Komplexfarbstoffe die durch Umsetzung mit 0,5 - 1,7 Mol, insbesondere 0,5 - 1,5 Mol, kupferabgebenden Mittels pro Mol Farbstoff erhalten werden, werden bevorzugt.

Als kupferabgebendes Mittel kann man Salze verwenden, welche das Kupfer als Kation enthalten, z.B. Kupfersulfat, Kupferchlorid oder Kupferacetat. In manchen Fällen ist die Verwendung komplexer Kupferverbindungen von Vorteil, z.B. in Form von Kupfer-Ammin-Komplexen, wie Kupfertetramminsulfate aus Kupfersulfat und Ammoniak, Pyridin oder Monoethanolamin, oder in Form von Verbindungen, welche das Kupfer komplex gebunden enthalten, z.B. komplexer Kupferverbindungen der Alkalisalze aliphatischer Aminocarbonsäuren oder Hydroxycarbonsäuren, wie des Glykokolls, der Milchsäure und vor allem der Weinsäure, wie Natriumkupfertartrat.

Die Behandlung mit dem kupferabgebenden Mittel erfolgt in wässrigem oder organisch-wässrigem Medium, z.B. bei Raumtemperatur, falls leicht metallisierbare Ausgangsverbindungen vorliegen oder durch Erwärmen auf Temperaturen zwischen 50 und 120°C im offenen Gefäß, z.B. unter Rückflusskühlung oder gegebenenfalls im geschlossenen Gefäß unter Druck; wobei die pH-Verhältnisse durch die Art des gewählten Metallisierungsverfahrens gegeben sind.

Sofern erwünscht können bei der Metallisierung auch Lösungsmittel, wie z.B. Alkohol, Dimethylformamid, usw. zugesetzt werden.

Bevorzugt werden Farbstoffe der allgemeinen Formel VII in Form der freien Säure 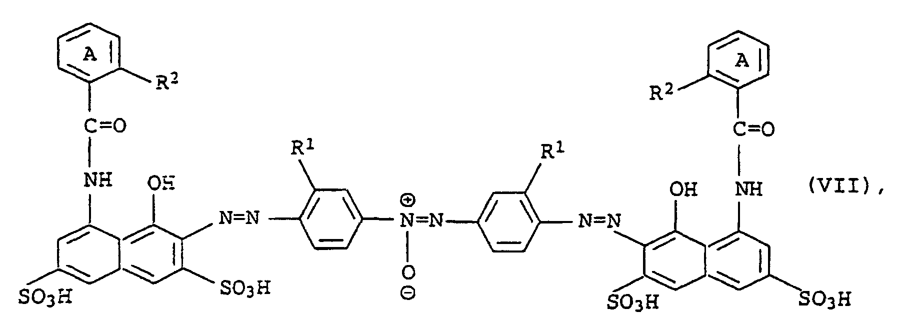 in der R¹, R² und A die obengenannte Bedeutung haben und deren Cu-Komplexe.

Weiterhin werden Farbstoffe I bevorzugt, in denen die Reste R¹ Methoxy bedeuten und die hieraus erhältlichen Cu-Komplexe.

Ferner werden Farbstoffe I und deren Cu-Komplexe bevorzugt, in denen die Phenylringe A unsubstituiert, also lediglich den Rest R² tragen oder mit C₁-C₄-Alkyl substituiert sind.

Es werden Farbstoffe I und VII und deren Cu-Komplexe bevorzugt in denen die Reste R² Carboxyl bedeuten.

Vor allem werden Farbstoffe I und VII bevorzugt, in denen R¹ Methoxy, R² Carboxy bedeuten und die Phenylringe A C₁-C₄-Alkyl als weitere Substituenten tragen oder bevorzugt unsubstituiert sind. Insbesondere werde die hieraus erhältlichen Cu-Komplexe bevorzugt.

Insbesondere werden die Cu-Komplexmischung der bevorzugten Farbstoffe bevorzugt, die durch Umsetzung mit 0,1-2, insbesondere 0,5-1,7 Moläquivalente eines Kupfer abgebenden Mittels erhalten werden.

Ein weiterer Gegenstand der vorliegenden Erfindung sind Azoxyfarbstoffe der allgemeinen Formel VIII in Form der freien Säure 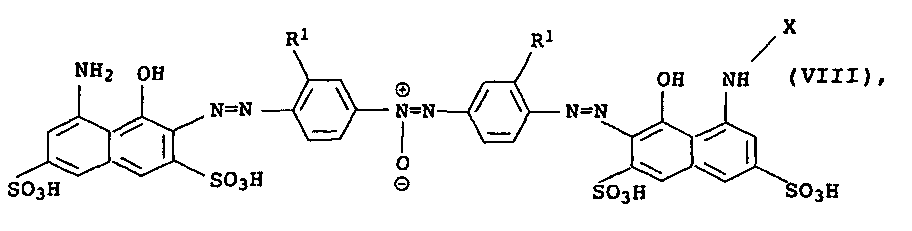 in der X Wasserstoff oder einen Rest der Formel 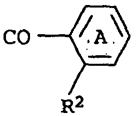 bedeutet, und R¹ Methoxy und Hydroxyl, R² und A die obengenannte Bedeutung haben.

Ein Weiterer Gegenstand der vorliegenden Erfindung sind Cu-Komplexfarbstoffe der allgemeinen Formel IX in Form der freien Säure 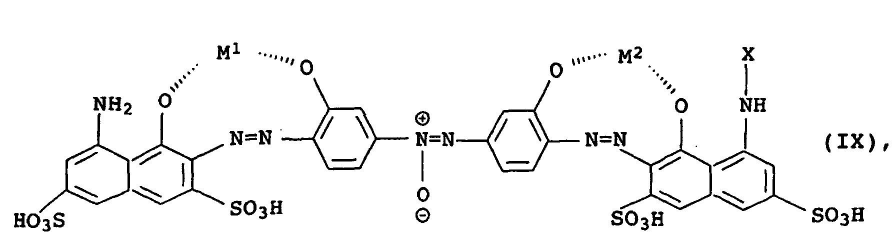 M1, M2 und X jeweils die oben genannte Bedeutung besitzen.

Bevorzugt sind Azoxyfarbstoffe der Formel VIII in Form der freien Säure, in der X Wasserstoff bedeutet.

Weiterhin bevorzugt sind Cu-Komplexfarbstoffe der Formel IX in Form der freien Säure, in der X Wasserstoff bedeutet.

Die Azoxyfarbstoffe der Formel VIII werden, wie vorne für die Azoxyfarbstoffe der Formel I beschrieben, erhalten. Die teilweise oder vollständige Abspaltung des Rests 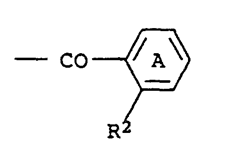 (Entacylierung) kann nach der Reduktion der Nitromonoazofarbstoffe zu Azoxyverbindung durch Steuerung des pH-Wertes erfolgen. Beim Arbeiten in wässriger Lösung bei einem pH-Wert unterhalb von 9 erfolgt praktisch die vollständige Entacylierung zu den Azoxyfarbstoffen der Formel VIII (X = Wasserstoff).

Der Farbstoff der Formel X 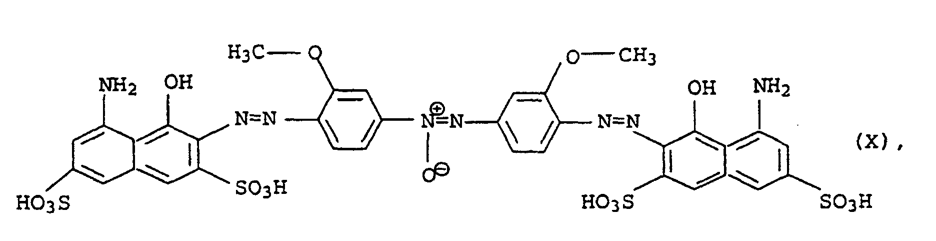 ist formal aus der EP-A-648 814 bekannt. Er ist dort in Beispiel 3 beschrieben. Es hat sich jedoch beim Nacharbeiten dieses Beispiels gezeigt, daß man anstelle des oben genannten Farbstoffs X den Monoazofarbstoff der Formel XI 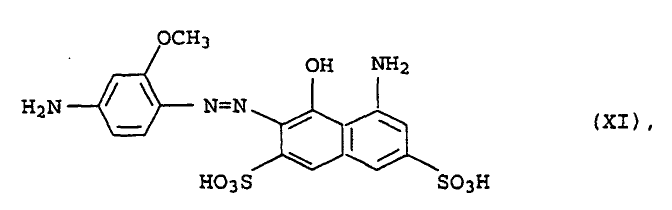 erhält.

Die erfindungsgemäßen Metallkomplexfarbstoffe können für sich alleine, in Gemischen untereinander und mit den Azoxyfarbstoffen I und VIII und zusammen mit anderen kationischen oder anionischen Verbindungen in Form ihrer Lösungen oder in Form von Pulvern oder Granulaten angewendet werden.

Bei der Herstellung von Farbstoffpräparationen, enthaltend die neuen Farbstoffe der Formel I, VII, VIII und/oder IX ist der Zusatz von Polymeren, wie Polyvinylaminen, Polyvinylamiden, Polyvinylacetaten, Polyvinylalkoholen, Polyvinylpyrrolidonen oder Copolymeren der jeweiligen Monomeren hervorzuheben. Desgleichen können Oligomere des Ethylenimins, Ethylenoxids oder Propylenoxids oder Derivate dieser Oligomeren zur Anwendung kommen. Weitere bevorzugte Zusatzstoffe sind Glykole wie 1,2-Glykol, 1,2-Propandiol, 2,3-Butylenglycol, Diethylenglycol, Triethylenglycol, Ethyltetraglycol, Dipropylenglycol, Ethylenglycol-monopropylether, Methyldiglycol, Triethylenglycol-mono-butylether, Triethylenglycol-mono-propylether, Diethylenglycolmonoethylether, Diethylenglycoldibutylether und besonders bevorzugt Harnstoff.

Sie eignen sich vorteilhaft zum Färben oder Bedrucken von polymeren Material, insbesondere von Papierstoffen wie Papier und Karton, aber auch von Cellulose, Baumwolle, Leder, Bastfasern, Hanf, Flachs, Sisal, Jute, Kokos, Stroh oder anionisch modifizierten Fasern sowie in Aufzeichnungsflüssigkeiten wie Tinten insbesondere für Ink-Jet oder Druckfarben.

Die erfindungsgemäßen Farbstoffe können vorzugsweise bei der Herstellung von in der Masse gefärbtem, geleimten und ungeleimtem Papier verwendet werden. Sie können ebenfalls zum Färben von Papier nach dem Tauchverfahren angewendet werden.

Das Färben von Papier, Leder oder Cellulose erfolgt nach an sich bekannten Methoden.

Die erfindungsgemäßen Cu-Komplexf arbstoffe färben in unterschiedlichen klaren Blautönen. Sie zeigen auf Papier ein sehr gutes Aufziehverhalten. Die neuen Farbstoffe oder ihre Präparationen färben das Abwasser bei der Papierherstellung praktisch gar nicht oder nur wenig an, was für die Reinhaltung der Gewässer besonders günstig ist. Sie sind hoch substantiv, melieren nicht, wenn sie auf Papier gefärbt sind und sind weitgehend pH-unempfindlich. Die Färbungen auf Papier zeichnen sich durch eine gute Lichtechtheit aus. Nach längerem Belichten ändert sich die Nuance Ton-in-Ton.

Die gefärbten Papiere, die eine gute Bleichbarkeit aufweisen, sind naßecht, nicht nur gegen Wasser, sondern ebenfalls gegen Milch, Seifenwasser, Natriumchloridlösungen, Fruchtsäfte oder gesüßtem Mineralwasser und wegen ihrer guten Alkoholechtheit auch gegen alkoholische Getränke beständig.

Mit den neuen Farbstoffen kann man auch Polyacrylnitriltextilien oder durch anionische Gruppen modifizierte Polyamid- oder Polyestertextilien färben, foulardieren oder bedrucken.

Die folgenden Beispiele sollen die Erfindung näher erläutern.

Herstellung der Kupplungskomponenten

### Beispiel 1

In 250 g Wasser wurden 34,1 g des Mononatriumsalzes der 1-Amino-8-hydroxynaphthalin-3,6-disulfonsäure eingetragen. Durch Zugabe von 10 gew.-%iger Natronlauge wurde ein pH-Wert von 7-8 eingestellt. Anschließend erfolgte bei 20-25°C die Zugabe von 19,3 g Phthalsäureanhydrid, wobei mit Hilfe von 10 gew.-%iger Natronlauge der pH-Wert auch während der Nachrührzeit von 3 h zwischen 7 und 8 gehalten wurde. Die vollständige Umsetzung der 1-Amino-8-hydroxynaphthalin-3,6-disulfonsäure wurde mit Hilfe der Dünnschichtchromatographie überprüft. Die so hergestellte Lösung der Kupplungskomponente wurde für die Synthese der Farbstoffe ohne Zwischenisolierung eingesetzt.

### Beispiel 2

In 300 g Wasser wurden 34,1 g des Mononatriumsalzes der 1-Amino-8-hydroxynaphthalin-3,6-disulfonsäure eingetragen. Durch Zugabe von 10 gew.-%iger Natriumcarbonatlösung wurde ein pH-Wert von 6-8 eingestellt. Anschließend erfolgte bei 20-30°C die Zugabe von 18 g Isatosäureanhydrid zugegeben, wobei mit Hilfe von 10 gew.-%iger Natriumcarbonatlösung der pH-Wert auch während der Nachrührzeit über Nacht zwischen 6 und 8 gehalten wurde. Die vollständige Reaktion der 1-Amino-8-hydroxynaphthalin-3,6-disulfonsäure wurde mit Hilfe der Dünnschichtchromatographie überprüft. Die so hergestellte Lösung der Kupplungskomponente wird für die Synthese der Farbstoffe ohne Zwischenisolierung eingesetzt.

### Beispiel 3

In 200 g Wasser wurden 34,1 g des Mononatriumsalzes der 1-Amino-8-hydroxynaphthalin-3,6-disulfonsäure eingetragen. Durch Zugabe von 25 gew.-%iger Kalilauge wurde ein pH-Wert von 7-9 eingestellt. Anschließend erfolgte bei 20-25°C die Zugabe von 26,5 g 4-tert.-Butylphthalsäureanhydrid, wobei mit Hilfe von 25 gew.-%iger Kalilauge der pH-Wert auch während der Nachrührzeit von 4 h zwischen 7 und 9 gehalten wurde. Die vollständige Reaktion der 1-Amino-8-hydroxynaphthalin-3,6-disulfonsäure wurde mit Hilfe der Dünnschichtchromatographie überprüft. Die so hergestellte Lösung der Kupplungskomponente wird für die Synthese der Farbstoffe ohne Zwischenisolierung eingesetzt.

### Beispiel 4

In 250 g Wasser wurden 34,1 g des Mononatriumsalzes der 1-Amino-8-hydroxynaphthalin-3,6-disulfonsäure eingetragen. Durch Zugabe von 10 gew.-%iger Natronlauge wurde ein pH-Wert von 7-8 eingestellt. Anschließend erfolgte bei 20-25°C die Zugabe von 30,9 g Isatosäureanhydid-N-essigsäuremethylester, wobei mit Hilfe von 10 gew.-%iger Natronlauge der pH-Wert auch während der Nachrührzeit von 3 h zwischen 7 und 8 gehalten wurde. Die vollständige Reaktion der 1-Amino-8-hydroxynaphthalin-3,6-disulfonsäure wurde mit Hilfe der Dünnschichtchromatographie überprüft. Die so hergestellte Lösung der Kupplungskomponente wurde für die Synthese der Farbstoffe ohne Zwischenisolierung eingesetzt.

### Beispiel 5

In 300 g Wasser wurden 23,9 g 3-Amino-8-hydroxynaphthalin-6-sulfonsäure eingetragen. Durch Zugabe von 10 gew.-%iger Natronlauge wurde ein pH-Wert von 7-8 eingestellt. Anschließend erfolgte bei 20-25°C die Zugabe von 20,8 g Phthalsäureanhydrid, wobei mit Hilfe von 10 gew.-%iger Natronlauge der pH-Wert auch während der Nachrührzeit über Nacht zwischen 7 und 8 gehalten wurde. Die vollständige Reaktion der 3-Amino-8-hydroxynaphthalin-6-sulfonsäure wurde mit Hilfe der Dünnschichtchromatographie überprüft. Die so hergestellte Lösung der Kupplungskomponente wurde für die Synthese der Farbstoffe ohne Zwischenisolierung eingesetzt.

Analog den Beispielen 1-5 lassen sich ausgehend von 1-Amino-8-hydroxynaphthalin-3,6-disulfonsäure; 3-Amino-8-hydroxynaphthalin-6-sulfonsäure und 1-Amino-8-hydroxynaphthalin-4,6-disulfonsäure die in der Tabelle 1 genannten Kupplungskomponenten der allgemeinen Formel Va, Vb und Vc herstellen.

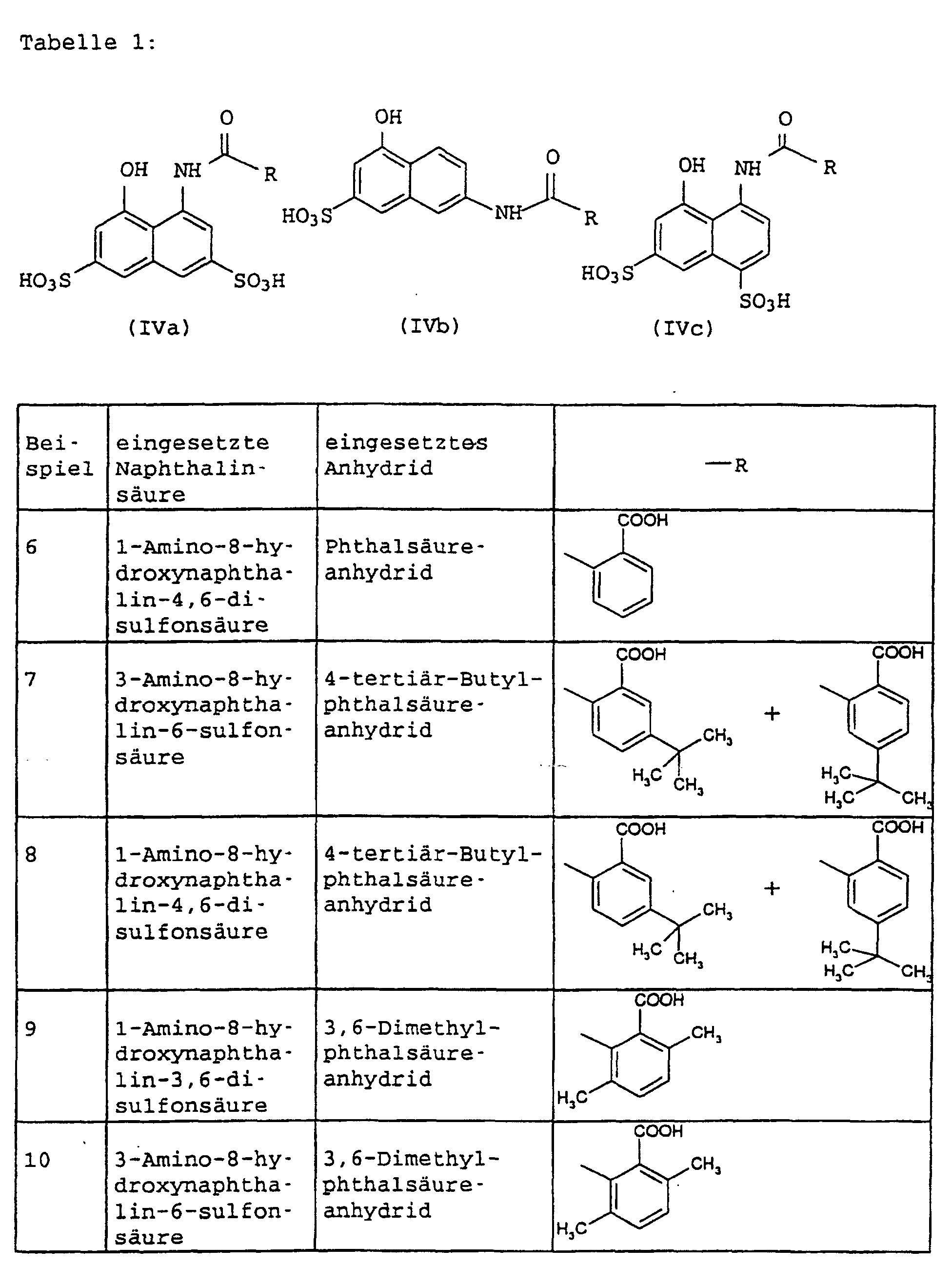

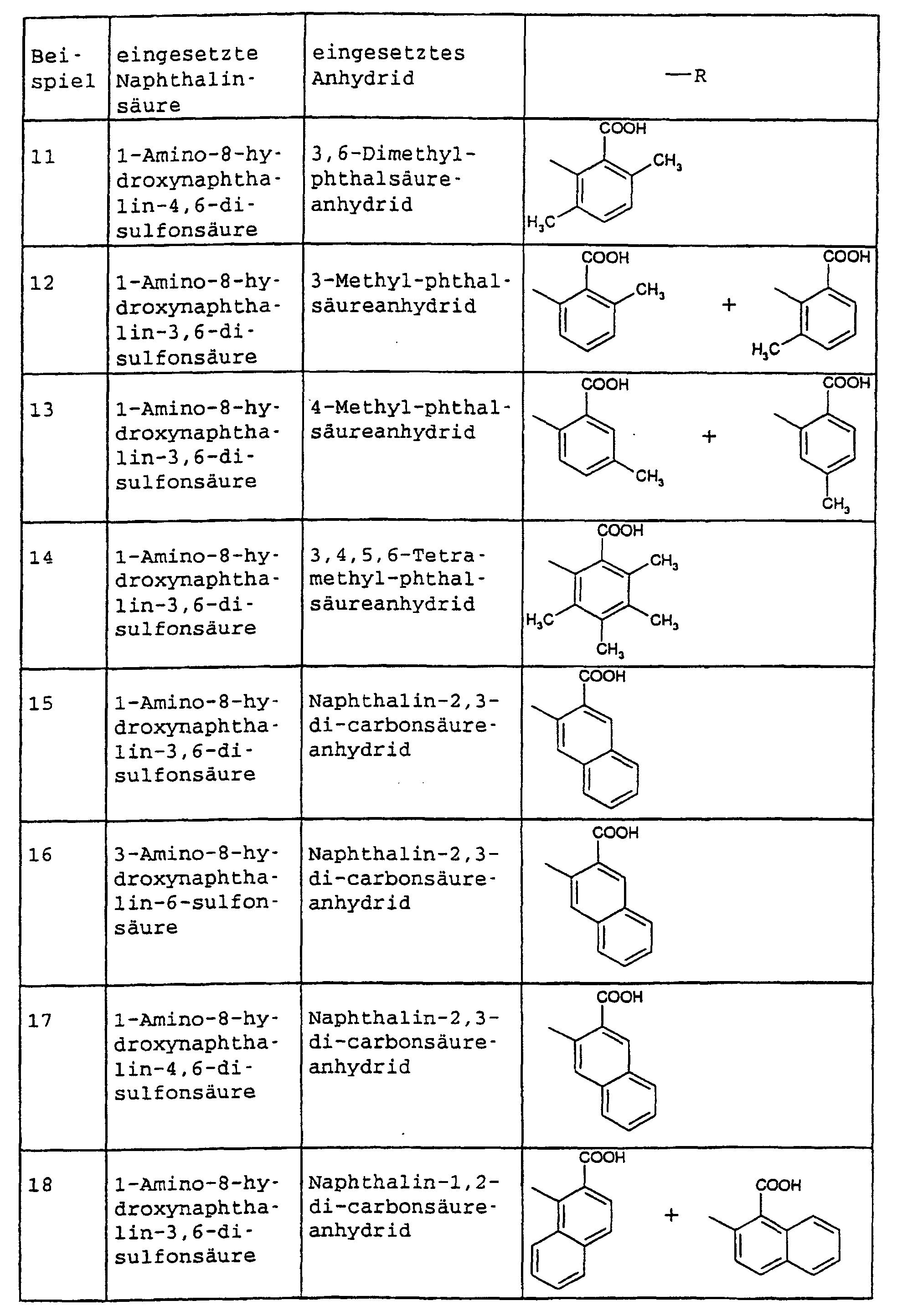

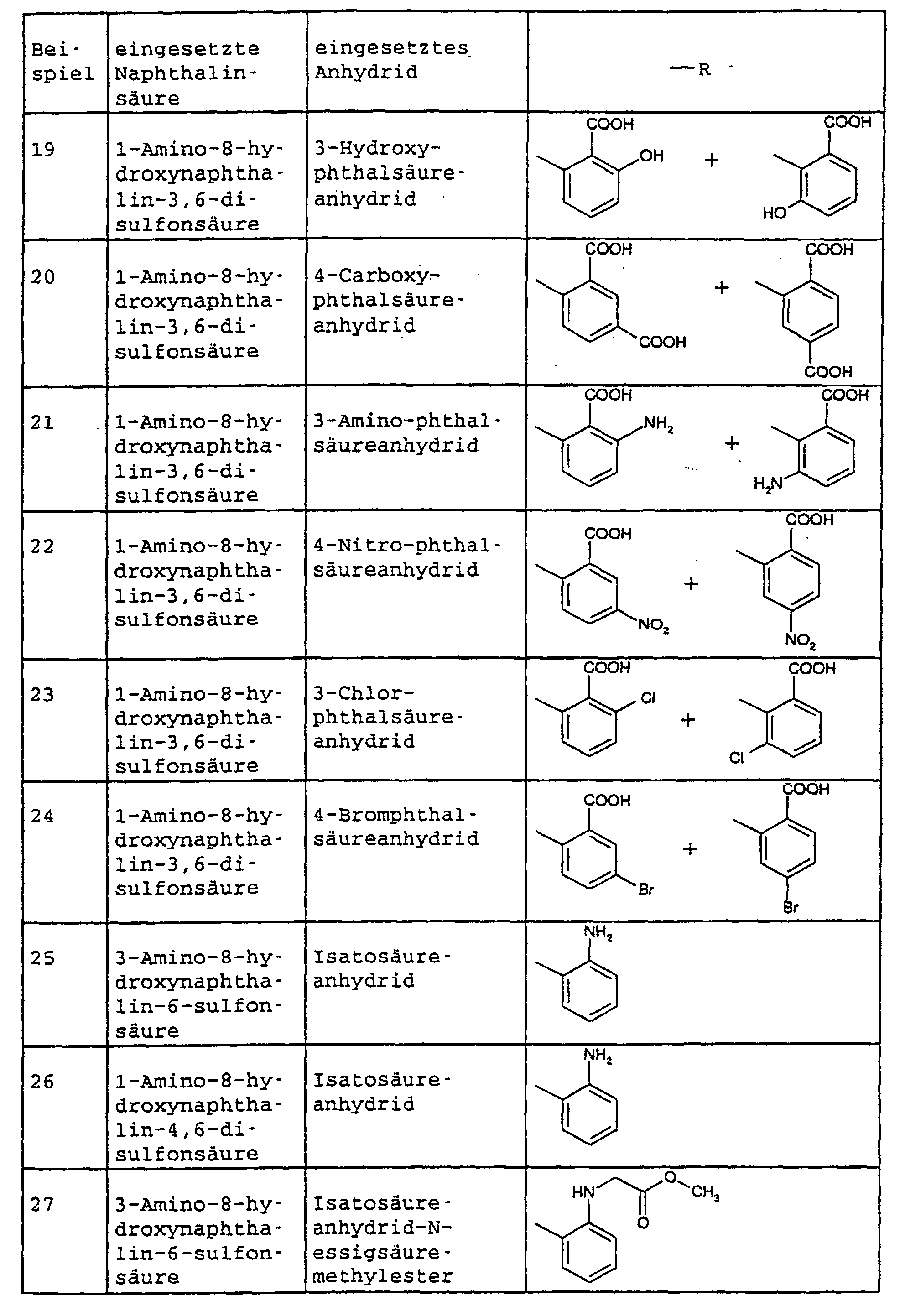

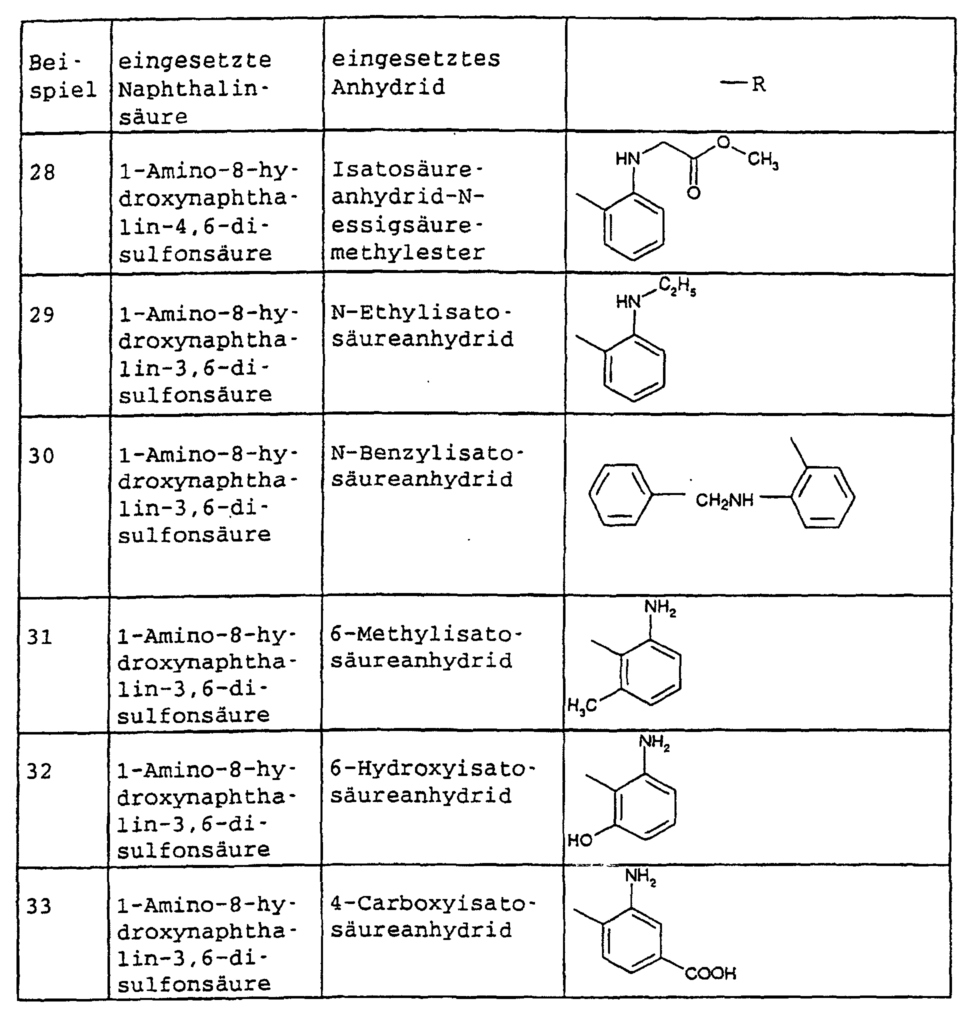

### Herstellung der erfindungsgemäßen Azoxyfarbstoffe

### Beispiel 34

16,8 g 2-Methoxy-4-nitroanilin wurden in 200 g Wasser vorgelegt und mit 30 g Salzsäure (konz.) versetzt. Anschließend wurden bei 0-10°C 32 ml einer 23 Gew.-%igen Natriumnitritlösung innerhalb von 30 Minuten zugegeben. Nach 2 h wurde der Nitritüberschuß durch Zugabe von Amidosulfonsäure zerstört und die so hergestellte Diazokomponente zu der nach Beispiel 1 hergestellten Kupplungskomponente innerhalb von 20 Minuten bei 15-20°C eingetragen. Durch gleichzeitige Zugabe von 20 ml 25 gew.-%iger Natronlauge wurde der pH bei 8-9 gehalten. Nach beendeter Kupplung wurden 100 g 50 gew.-%ige Natronlauge zudosiert. Bei 40-45 °C wurden unter Rühren langsam 47 g einer 25 gew.-%igen Glucoselösung zugetropft. Nach beendeter Reaktion (DC-Kontrolle) wurde der Farbstoff durch Zugabe von 130 g Salzsäure (konz.) ausgefällt und durch Filtration isoliert. Der so erhaltene Farbstoff färbt Papier in einer blauen Nuance ( λₘₐₓ = 592 nm).

### Beispiel 35

16,8 g 2-Methoxy-4-nitroanilin wurden in 200 g Wasser vorgelegt und mit 30 g Salzsäure (konz.) versetzt. Anschließend wurden bei 0-10°C 32 ml einer 23 gew.-%igen Natriumnitritlösung innerhalb von 30 Minuten zugegeben. Nach 2 h wurde der Nitritüberschuß durch Zugabe von Amidosulfonsäure zerstört und die so hergestellte Diazokomponente zu der nach Beispiel 1 hergestellten Kupplungskomponente innerhalb von 20 Minuten bei 15-20°C eingetragen. Durch gleichzeitige Zugabe von 20 ml 25 gew.-%iger Natronlauge wurde der pH bei 8-9 gehalten. Nach beendeter Kupplung wurden 20 g 50 gew.-%ige Natronlauge zudosiert. Bei 90 °C wurden unter Rühren langsam 135 g einer 10 gew.-%igen Glucoselösung zugetropft. Nach beendeter Reaktion (DC-Kontrolle) wurde der Farbstoff durch Zugabe von 80 g Salzsäure (konz.) ausgefällt und durch Filtration isoliert.

### Beispiel 36

16,8 g 2-Methoxy-4-nitroanilin wurden in 200 g Wasser vorgelegt und mit 30 g Salzsäure (konz.) versetzt. Anschließend wurden bei 0-10°C 32 ml einer 23 gew.-%igen Natriumnitritlösung innerhalb von 30 Minuten zugegeben. Nach 2 h wurde der Nitritüberschuß durch Zugabe von Amidosulfonsäure zerstört und die so hergestellte Diazokomponente zu der in Beispiel 1 hergestellten Kupplungskomponente innerhalb von 20 Minuten bei 15-20°C eingetragen. Durch gleichzeitige Zugabe von 20 ml 25 gew.-%iger Natronlauge wurde der pH bei 8-9 gehalten. Nach beendeter Kupplung wurden 100 g 50 gew.-%ige Natronlauge zudosiert. Bei 60 °C wurden unter Rühren langsam 44 g einer 25 gew.-%igen Glucoselösung zugetropft. Nach beendeter Reaktion (DC-Kontrolle) wurde der Farbstoff durch Zugabe von 130 g Salzsäure (konz.) ausgefällt und durch Filtration isoliert.

### Beispiel 37

18,2 g 5-Nitro-anthranilsäure wurden in 290 g Wasser vorgelegt und mit 40 g Salzsäure (konz.) versetzt. Anschließend wurden bei 0-10°C 32 ml einer 23 Gew.-%igen Natriumnitrit innerhalb von 30 Minuten zugegeben. Nach 2 h wurde der Nitritüberschuß durch Zugabe von Amidosulfonsäure zerstört und die so hergestellte Diazokomponente zu der in Beispiel 1 hergestellten Kupplungskomponente innerhalb von 20 Minuten bei 15-20°C eingetragen. Durch gleichzeitige Zugabe von 200 ml 10 Gew.-%iger Natronlauge wurde der pH bei 8-9 gehalten. Nach beendeter Kupplung wurde die Suspension mit 40 G 50 Gew.-%ige Natronlauge versetzt. Bei 50 °C wurden unter Rühren langsam 45 ml einer 10 Gew.-%igen Glucoselösung zugetropft. Nach beendeter Reaktion (DC-Kontrolle) wurde der Farbstoff durch Zugabe von Salzsäure (konz.) ausgefällt und durch Filtration isoliert. Der so erhaltene Farbstoff färbt Papier in blauen Nuancen ( λₘₐₓ = 556 nm).

### Beispiel 38

16,8 g 2-Methoxy-4-nitroanilin wurden in 200 g Wasser vorgelegt und mit 30 g Salzsäure (konz.) versetzt. Anschließend wurden bei 0-10°C 32 ml einer 23 gew.-%igen Natriumnitritlösung innerhalb von 30 Minuten zugegeben. Nach 2 h wurde der Nitritüberschuß durch Zugabe von Amidosulfonsäure zerstört und die Diazokomponente mit Natriumacetat auf pH 3-4 abgestumpft. Anschließend wurde die in Beispiel 2 hergestellte Kupplungskomponente innerhalb von 20 Minuten bei 15-20°C eingetragen und der pH mit 10 gew.-%iger Natronlauge auf 4-5 gestellt. Der Monoazofarbstoff wurde durch Filtration isoliert. Der feuchte Preßkuchen wurde in 1000 g Wasser eingetragen und mit 100 g 50 gew.-%ige Natronlauge versetzt. Bei 60 °C wurden unter Rühren langsam 45 ml einer 25 gew.-%igen Glucoselösung zugetropft. Nach beendeter Reaktion (DC-Kontrolle) wurde der Farbstoff durch Zugabe von 150 g Salzsäure (konz.) ausgefällt und durch Filtration isoliert. Der so erhaltene Farbstoff färbt Papier in rotstichig blauen Nuancen ( λₘₐₓ = 544 nm).

### Beispiel 39

16,8 g 2-Methoxy-4-nitroanilin wurden in 200 g Wasser vorgelegt und mit 30 g Salzsäure (konz.) versetzt. Anschließend wurden bei 0-10°C 32 ml einer 23 gew.-%igen Natriumnitrit innerhalb von 30 Minuten zugegeben. Nach 2 h wurde der Nitritüberschuß durch Zugabe von Amidosulfonsäure zerstört und die so hergestellte Diazokomponente zu der in Beispiel 3 hergestellten Kupplungskomponente innerhalb von 20 Minuten bei 15-20°C eingetragen. Durch gleichzeitige Zugabe 10 Gew.-%iger Natronlauge wurde der pH bei 8-9 gehalten. Nach beendeter Kupplung wurden 15 g 50 gew.-%ige Natronlauge zudosiert. Bei 65 °C wurden unter Rühren langsam 115 ml einer 15 gew.-%igen Glucoselösung zugetropft. Nach beendeter Reaktion (DC-Kontrolle) wurde der Farbstoff durch Zugabe von Salzsäure (konz.) ausgefällt und durch Filtration isoliert. Der so erhaltene Farbstoff färbt Papier in blauen Nuancen ( λₘₐₓ = 590 nm).

### Beispiel 40

16,8 g 2-Methoxy-4-nitroanilin wurden in 200 g Wasser vorgelegt und mit 30 g Salzsäure (konz.) versetzt. Anschließend wurden bei 0-10°C 32 ml einer 23 gew.-%igen Natriumnitritlösung innerhalb von 30 Minuten zugegeben. Nach 2 h wurde der Nitritüberschuß durch Zugabe von Amidosulfonsäure zerstört und die so hergestellte Diazokomponente zu der in Beispiel 5 hergestellten Kupplungskomponente innerhalb von 20 Minuten bei 15-20°C eingetragen. Durch gleichzeitige Zugabe von 20 ml 25 gew.-%iger Natronlauge wurde der pH bei 8-9 gehalten. Nach beendeter Kupplung wurden 25 g 50 gew.-%ige Natronlauge zudosiert. Bei 60 °C wurden unter Rühren langsam 130 g einer 10 gew.-%igen Glucoselösung zugetropft. Nach beendeter Reaktion (DC-Kontrolle) wurde der Farbstoff durch Zugabe von 130 g Salzsäure (konz.) ausgefällt und durch Filtration isoliert. Der so erhaltene Farbstoff färbt Papier in einer blauen Nuance ( λₘₐₓ = 584 nm).

Analog der Beispiele 34 - 40 lassen sich die in der Tabelle 2 genannten Farbstoffe der allgemeinen Formel Ia, Ib und Ic herstellen. Die Wahl der optimalen Reduktionsbedingungen wird auf die Art der einzusetzenden Nitroazoverbindung abgestellt und ist durch Vorversuche leicht zu ermitteln. Die so erhaltenen Farbstoffe können durch Zugabe von Salzsäure isoliert werden oder aus der Reaktionssuspension auf Papier ausgefärbt werden.

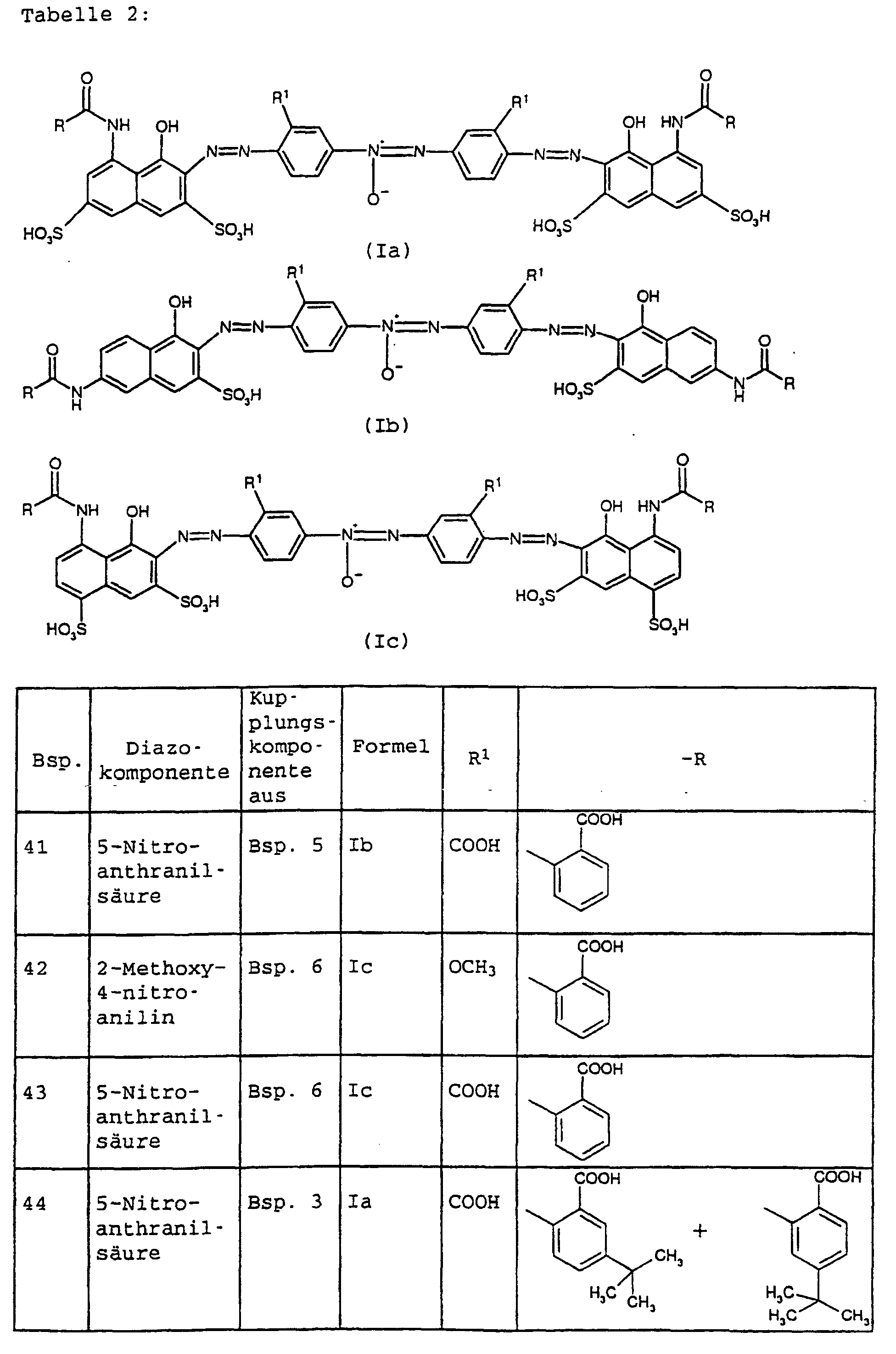

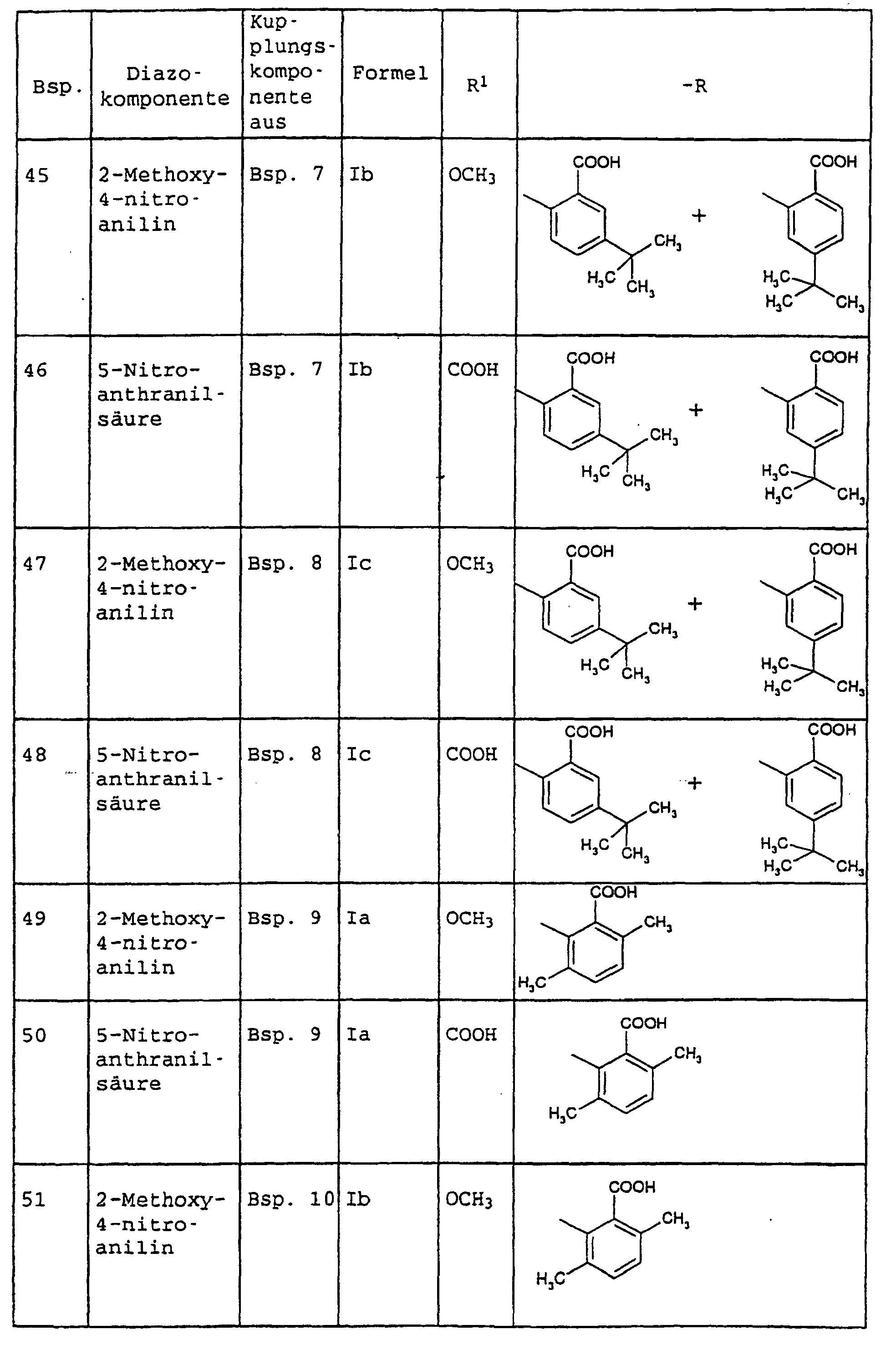

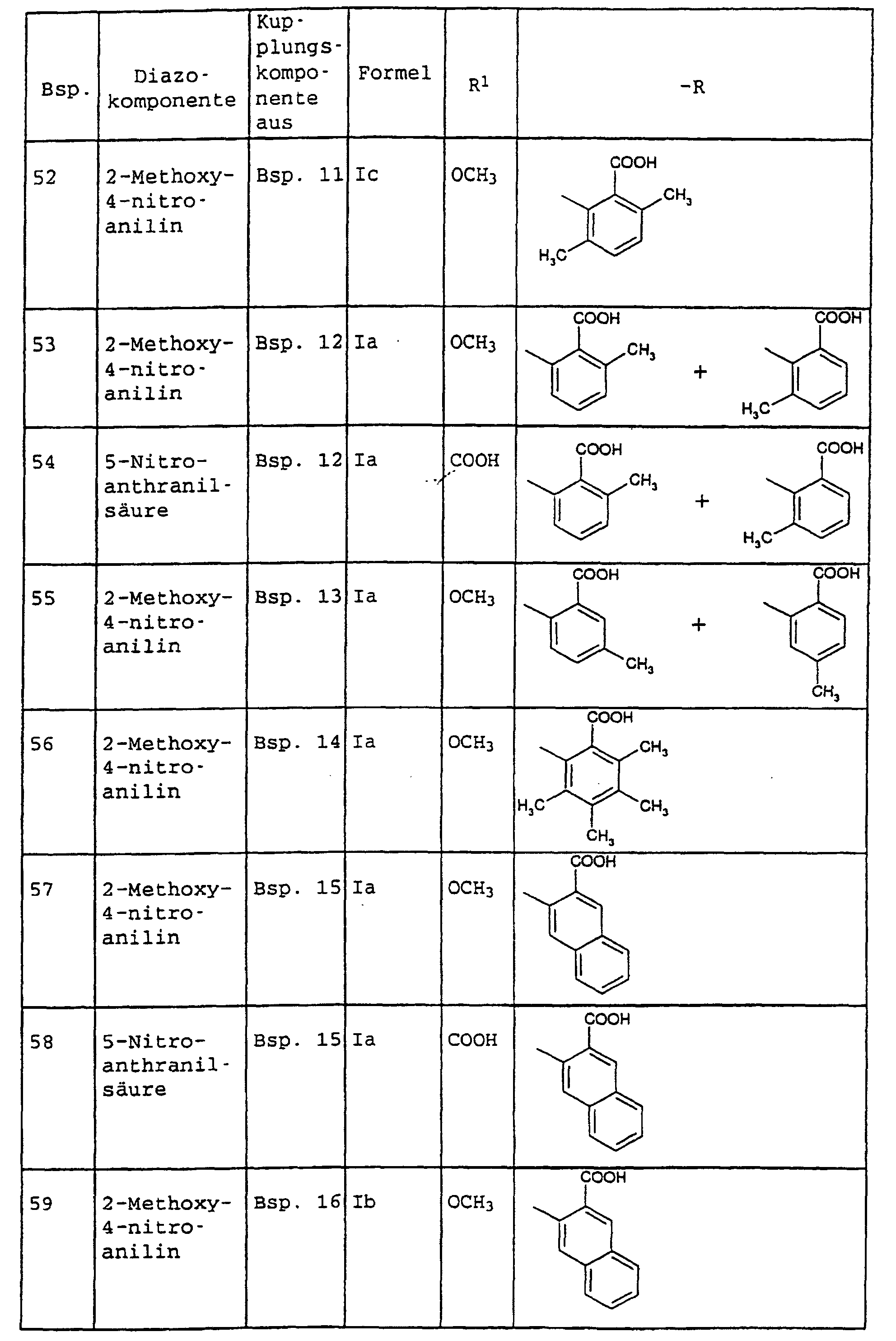

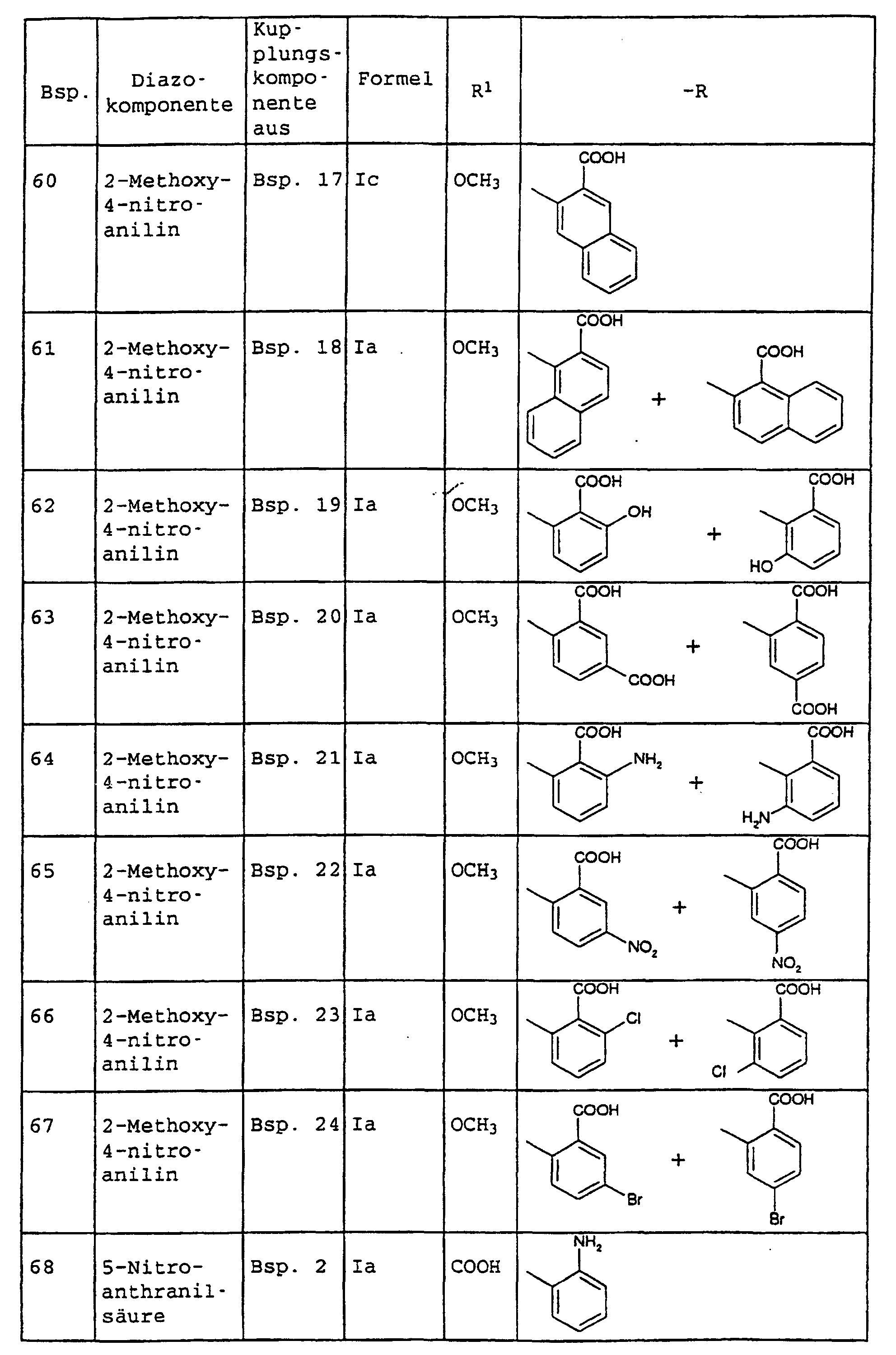

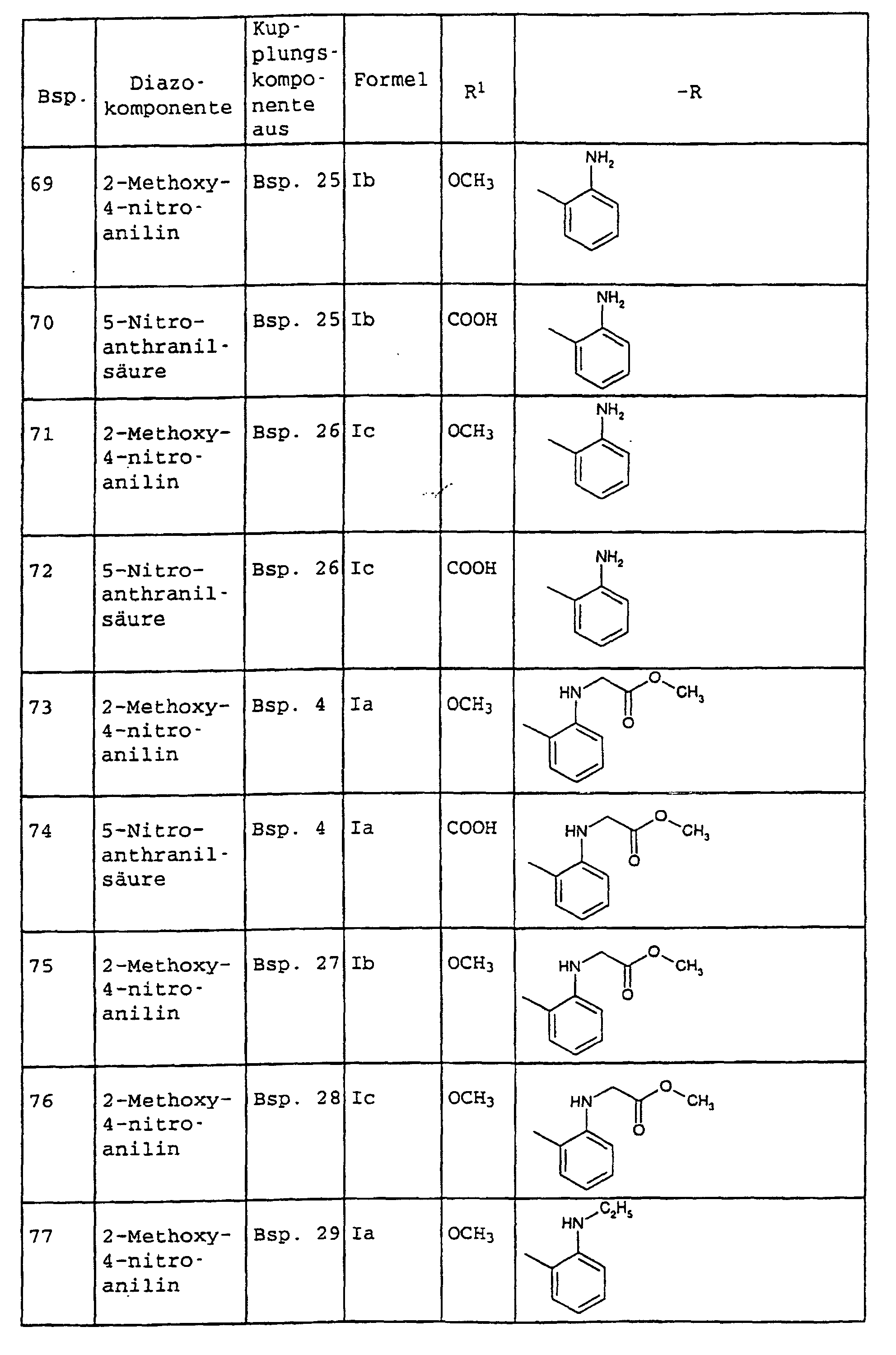

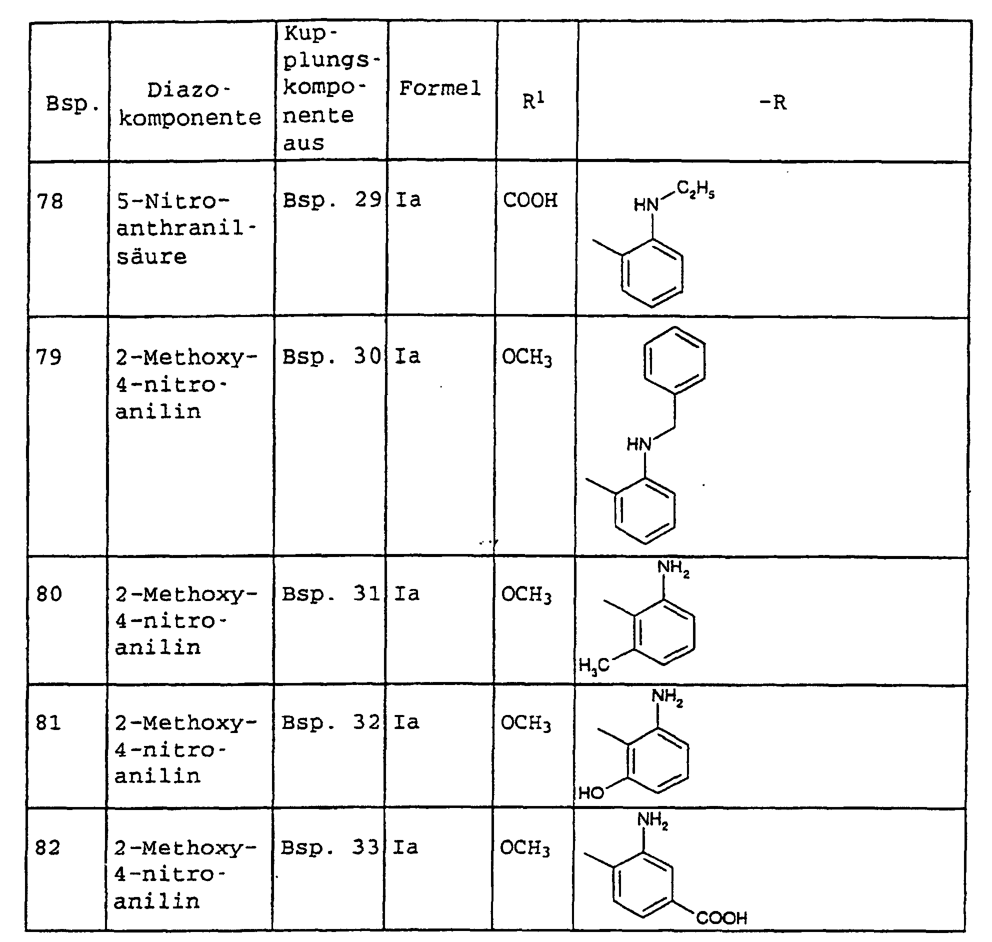

### Synthese der erfindungsgemäßen Kupferkomplexe

Die Darstellung der Kupferkomplexe erfolgt nach im Prinzip bekannten Verfahren:

Die entalkylierende Kupferung von o-Hydroxy-o'-methoxy-Azofarbstoffen erfordert im ammoniakalischem Medium im allgemeinen 6-12 stündiges Erhitzen auf 80-90°C. Ammoniak kann dabei ganz oder teilweise durch organische stickstoffhaltige Basen ersetzt werden. Die Kupferung kann ausgehend von den isolierten Farbstoffen durchgeführt werden oder sich direkt an die Reduktion anschließen, wobei die kupferfreien Farbstoffe nicht zwischenisoliert werden. Wurde der kupferfreie Farbstoff isoliert ist sowohl der Einsatz des feuchten Preßkuchens als auch die Umsetzung des getrockneten Farbstoffs möglich. Das Verhältnis von kupferfreiem Farbstoff zu einfach gekupfertem Farbstoff zu zweifach gekupfertem Farbstoff hängt von der angebotenen Kupfersalzmenge ab. Die so hergestellten Farbstoffe wurden zum Teil durch Zugabe von Salzsäure gefällt und zum Teil direkt aus der Reaktionslösung auf Papier ausgefärbt. Die Farbstoffe können mit Hilfe üblicher Methoden in Form ihrer Salze (z.B. Li, Na, K; (gegebenenfalls substituiertes) Ammonium) als stabile Flüssigeinstellungen gewonnen werden.

### Beispiel 83

1/5 des isolierten nach Beispiel 34 hergestellten Farbstoffs wurde in 250 g Wasser aufgeschlämmt, mit 5,5 g Diethanolamin und 0,75 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 598 nm).

### Beispiel 84

1/5 des isolierten nach Beispiel 34 hergestellten Farbstoffs wurde in 250 g Wasser aufgeschlämmt, mit 5,5 g Diethanolamin und 1,25 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 600 nm).

### Beispiel 85

1/5 des isolierten nach Beispiel 34 hergestellten Farbstoffs wurde in 250 g Wasser aufgeschlämmt, mit 5,5 g Diethanolamin und 1,75 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 602 nm).

### Beispiel 86

1/5 des isolierten nach Beispiel 34 hergestellten Farbstoffs wurde in 250 g Wasser aufgeschlämmt, mit 5,5 g Diethanolamin und 2,25 g Kupfer(II)-sulfat-pentahydrat versetzt. Anschließend wurde der pH-Wert mit 10 Gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 606 nm).

### Beispiel 87

1/5 des isolierten nach Beispiel 34 hergestellten Farbstoffs wurde in 250 g Wasser aufgeschlämmt, mit 5,5 g Diethanolamin und 2,75 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 610 nm).

### Beispiel 88

1/5 des isolierten nach Beispiel 34 hergestellten Farbstoffs wurde in 250 g Wasser aufgeschlämmt, mit 5,5 g Diethanolamin und 3,25 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 614 nm).

### Beispiel 89

1/5 des isolierten nach Beispiel 34 hergestellten Farbstoffs wurde in 250 g Wasser aufgeschlämmt, mit 5,5 g Diethanolamin und 3,75 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 618 nm) .

### Beispiel 90

1/5 des isolierten nach Beispiel 34 hergestellten Farbstoffs wurde in 250 g Wasser aufgeschlämmt, mit 5,5 g Diethanolamin und 4,25 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 618 nm).

### Beispiel 91

1/5 des isolierten nach Beispiel 34 hergestellten Farbstoffs wurde in 250 g Wasser aufgeschlämmt, mit 5,5 g Diethanolamin und 4,5 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 624 nm).

### Beispiel 92

1/5 des isolierten nach Beispiel 34 hergestellten Farbstoffs wurde in 250 g Wasser aufgeschlämmt, mit 5,5 g Diethanolamin und 5 g Kupfer(II)-sulfat-pentahydrat versetzt. Anschließend wurde der pH-Wert mit 10 Gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 626 nm).

### Beispiel 93

In üblicher Weise werden die in Beispiel 34, 83, 84, 85, 86, 87, 88, 89, 90, 91 und 92 hergestellten Farbstoffe auf verschiedenen Papierstoffmodellen in einer Massefärbung auf 1/6 Richtyptiefe ausgefärbt. Dabei zeigt sich, daß der Farbton der Farbstoffe in dieser Reihenfolge grüner wird und die Lichtechtheit zunimmt.

### Beispiel 94

1/5 der Reaktionssuspension des nach Beispiel 34 hergestellten Farbstoffs wurde mit 170 g Wasser verdünnt, mit 5,5 g Diethanolamin und 2,75 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 602 nm).

### Beispiel 95

1/5 der Reaktionssuspension des nach Beispiel 34 hergestellten Farbstoffs wurde mit 170 g Wasser verdünnt, mit 5,5 g Diethanolamin und 5,2 g Kupfer(II)-sulfat-pentahydrat versetzt. Anschließend wurde der pH-Wert mit 10 gew.-%iger Natronlauge auf 8,5-9 gestellt. Danach wurde das Reaktionsgemisch 7 h bei 90°C bei diesem pH gerührt. Der so erhaltene Farbstoff färbt Papier in einer blauen Nuance ( λₘₐₓ = 608 nm).

### Beispiel 96

3/5 des isolierten nach Beispiel 34 hergestellten Farbstoffs wurden in 750 g Wasser aufgeschlämmt, mit 16,5 g Diethanolamin und 7,8 g Kupferacetat versetzt. Anschließend wurde der pH-Wert mit 10 gew.-%iger Natronlauge auf 8,5-9 gestellt. Danach wurde das Reaktionsgemisch 8 h bei 80°C bei diesem pH gerührt. Der so erhaltene Farbstoff färbt Papier in einer blauen Nuance ( λₘₐₓ = 614 nm).

### Beispiel 97

1/5 des isolierten nach Beispiel 34 hergestellten Farbstoffs wurde in 155 g Wasser aufgeschlämmt, mit 5,5 g Diethanolamin und 2,6 g Kupferacetat versetzt. Anschließend wurde der pH-Wert mit 10 gew.-%iger Natronlauge auf 8,5-9 gestellt. Danach wurde das Reaktionsgemisch 8 h bei 80°C bei diesem pH gerührt. Der so erhaltene Farbstoff färbt Papier in einer blauen Nuance (λₘₐₓ = 612 nm).

### Beispiel 98

1/5 der Reaktionssuspension des nach Beispiel 39 hergestellten Farbstoffs wurde mit 140 g Wasser verdünnt, mit 5,5 g Diethanolamin und 6 g Kupfer(II)-sulfat-pentahydrat versetzt. Danach wurde das Reaktionsgemisch 6 h bei 85°C gerührt. Der so erhaltene Farbstoff färbt Papier in einer blauen Nuance (λₘₐₓ = 620 nm).

### Beispiel 99

1/5 der Reaktionssuspension des nach Beispiel 39 hergestellten Farbstoffs wurde mit 140 g Wasser verdünnt, mit 18 g 25 %igem Ammoniak und 6 g Kupfer(II)-sulfat-pentahydrat versetzt. Danach wurde das Reaktionsgemisch 6 h bei 85°C gerührt. Der so erhaltene Farbstoff färbt Papier in einer blauen Nuance (λₘₐₓ = 604 nm).

### Beispiel 100

1/5 der Reaktionssuspension des nach Beispiel 40 hergestellten Farbstoffs wurde mit 140 g Wasser verdünnt, mit 5,5 g Diethanolamin und 6 g Kupfer(II)-sulfat-pentahydrat versetzt. Danach wurde das Reaktionsgemisch 6 h bei 85°C gerührt. Der so erhaltene Farbstoff färbt Papier in einer blauen Nuance (λₘₐₓ = 588 nm).

### Beispiel 101

1/5 der Reaktionssuspension des nach Beispiel 40 hergestellten Farbstoffs wurde mit 140 g Wasser verdünnt, mit 18 g 25 %igem Ammoniak und 6 g Kupfer(II)-sulfat-pentahydrat versetzt. Danach wurde das Reaktionsgemisch 6 h bei 85°C gerührt. Der so erhaltene Farbstoff färbt Papier in einer blauen Nuance ( λₘₐₓ = 586 nm).

### Beispiel 102

2/5 des isolierten nach Beispiel 38 hergestellten Farbstoffs wurden in 365 g Wasser aufgeschlämmt, mit 11 g Diethanolamin und 10 g Kupfer(II)-sulfat-pentahydrat versetzt. Anschließend wurde das Reaktionsgemisch 6 h bei 85°C gerührt. Der so erhaltene Farbstoff färbt Papier in einer blauen Nuance.
Die Hälfte des Ansatzes wurde als Reaktionssuspension abgefüllt. ( λₘₐₓ = 564 nm).
Die andere Hälfte des Ansatzes wurde mit 25 g Salzsäure (konz.) versetzt und der ausgefallene Farbstoff wurde abfiltriert, mit Natriumchloridlösung gewaschen und anschließend bei 50-60°C im Vakuum getrocknet. ( λₘₐₓ = 546 nm) .

### Beispiel 103

2/5 des isolierten nach Beispiel 38 hergestellten Farbstoffs wurden in 365 g Wasser aufgeschlämmt, mit 36 g 25 %igem Ammoniak und 10 g Kupfer(II)-sulfat-pentahydrat versetzt. Anschließend wurde das Reaktionsgemisch 6 h bei 85°C gerührt. Der so erhaltene Farbstoff färbt Papier in einer blauen Nuance.
Die Hälfte des Ansatzes wurde als Reaktionssuspension abgefüllt. ( λₘₐₓ = 564 nm).
Die andere Hälfte des Ansatzes wurde mit 25 g Salzsäure (konz.) versetzt und der ausgefallene Farbstoff wurde abfiltriert, mit Natriumchloridlösung gewaschen und anschließend bei 50-60°C im Vakuum getrocknet. ( λₘₐₓ = 546 nm ).

Analog den Beispielen 83 - 103 lassen sich ausgehend von den Azoxyfarbstoffen der Beispiele 41-82 je nach den in Tabelle 3 aufgeführten Bedingungen Farbstoffmischungen aus dem unkomplexierten, 1fach kupferkomplexierten und 2fach kupferkomplexierten Azoxyfarbstoff erhalten, die Papier gleichmäßig anfärben und gute Echtheiten aufweisen. Die Wahl der optimalen Reaktionsbedingungen (pH, Temperatur, Reaktionszeit) wird auf die Art des einzusetzenden Farbstoffs abgestellt und ist durch Vorversuche leicht zu ermitteln. Die so erhaltenen Farbstoffe können durch Zugabe von Säure isoliert werden oder aus der Reaktionssuspension auf Papier ausgefärbt werden.

**Tabelle 3:**

| Beispiel | Azoxyfarbstoff | mol Cu-Salz pro mol Farbstoff |
|---|---|---|
| 104 | Beispiel 42 | 1 |
| 105 | Beispiel 42 | 2 |
| 106 | Beispiel 45 | 1 |
| 107 | Beispiel 45 | 1,5 |
| 108 | Beispiel 45 | 2 |
| 109 | Beispiel 47 | 2 |
| 110 | Beispiel 49 | 2 |
| 111 | Beispiel 51 | 2 |
| 112 | Beispiel 52 | 2 |
| 113 | Beispiel 53 | 2 |
| 114 | Beispiel 55 | 2 |
| 115 | Beispiel 56 | 2 |
| 116 | Beispiel 57 | 2 |
| 117 | Beispiel 59 | 2 |
| 118 | Beispiel 61 | 2 |
| 119 | Beispiel 62 | 2 |
| 120 | Beispiel 66 | 2 |
| 121 | Beispiel 69 | 1 |
| 122 | Beispiel 69 | 2 |
| 123 | Beispiel 71 | 2 |
| 124 | Beispiel 73 | 1 |
| 125 | Beispiel 73 | 2 |
| 126 | Beispiel 75 | 2 |
| 127 | Beispiel 77 | 2 |
| 128 | Beispiel 80 | 2 |

Die Kupferkomplexe von wasserlöslichen o-Hydroxy-o'-carboxy-Azofarbstoffen bilden sich unter milden Bedingungen bei Raumtemperatur im schwach sauren oder ammoniakalischen pH-Bereich. Aus Löslichkeitsgründen wendet man bei der technischen Herstellung erhöhte Temperaturen an. Metallisiert man im sauren Bereich, so puffert man die freiwerdende Mineralsäure mit Natriumacetat ab. Auch bei diese Substanzklasse kann die Kupferung ausgehend von den isolierten Farbstoffen durchgeführt werden oder sich direkt an die Reduktion anschließen, wobei die kupferfreien Farbstoffe nicht zwischenisoliert werden. Wurde der kupferfreie Farbstoff isoliert ist sowohl der Einsatz des feuchten Preßkuchens als auch die Umsetzung des getrockneten Farbstoffs möglich. Das Verhältnis von kupferfreiem Farbstoff zu einfach gekupfertem Farbstoff zu zweifach gekupfertem Farbstoff hängt von der angebotenen Kupfersalzmenge ab. Die so hergestellten Farbstoffe wurden zum Teil durch Zugabe von Salzsäure gefällt und zum Teil direkt aus der Reaktionslösung auf Papier ausgefärbt. Die Farbstoffe können mit Hilfe üblicher Methoden in Form ihrer Salze (z.B. Li, Na, K; (gegebenenfalls substituiertes) Ammonium) als stabile Flüssigeinstellungen gewonnen werden.

### Beispiel 129

1/5 des isolierten nach Beispiel 37 hergestellten Farbstoffs wurde in 150 g Wasser aufgeschlämmt mit 10 g Diethanolamin und mit 5 g Kupfer(II)-sulfat-pentahydrat versetzt. Anschließend wurde der pH-Wert mit 10 gew.-%iger Natronlauge auf 10 gestellt.

Danach wurde das Reaktionsgemisch 8 h bei 90°C gerührt. Der so erhaltene Farbstoff färbt Papier in einer blauen Nuance ( λₘₐₓ = 574 nm) .

### Beispiel 130

1/5 des isolierten nach Beispiel 37 hergestellten Farbstoffs wurde in 150 g Wasser aufgeschlämmt, mit 4,5 g 25 % igem Ammoniak und mit 5 g Kupfer(II)-sulfat-pentahydrat versetzt. Anschließend wurde der pH-Wert mit 10 gew.-%iger Natronlauge auf 9,5 gestellt. Danach wurde das Reaktionsgemisch 8 h bei 90°C gerührt. Der so erhaltene Farbstoff färbt Papier in einer blauen Nuance ( λₘₐₓ = 576 nm) .

### Beispiel 131

1/5 des isolierten nach Beispiel 37 hergestellten Farbstoffs wurde in 150 g Wasser aufgeschlämmt und mit 5 g Kupfer(II)-sulfat-pentahydrat versetzt. Anschließend wurde der pH-Wert mit 10 gew.-%iger Natronlauge auf 4 gestellt. Danach wurde das Reaktionsgemisch 8 h bei 90°C gerührt. Der so erhaltene Farbstoff färbt Papier in einer blauen Nuance ( λₘₐₓ = 602 nm).

Analog den Beispielen 129 - 131 lassen sich ausgehend von den Azoxyfarbstoffen der Beispiele 41-82 je nach den in Tabelle 4 aufgeführten Bedingungen Farbstoffmischungen aus dem unkomplexierten, 1fach kupferkomplexierten und 2fach kupferkomplexierten Azoxyfarbstoff erhalten, die Papier gleichmäßig anfärben und gute Echtheiten aufweisen. Die Wahl der optimalen Reaktionsbedingungen (pH, Temperatur, Reaktionszeit) wird auf die Art des einzusetzenden Farbstoffs abgestellt und ist durch Vorversuche leicht zu ermitteln. Die so erhaltenen Farbstoffe können durch Zugabe von Säure isoliert werden oder aus der Reaktionssuspension auf Papier ausgefärbt werden.

**Tabelle 4:**

| Beispiel | Azoxyfarbstoff | mol Cu-Salz pro mol Farbstoff |
|---|---|---|
| 132 | Beispiel 37 | 1 |
| 133 | Beispiel 41 | 1 |
| 134 | Beispiel 41 | 2 |
| 135 | Beispiel 43 | 1 |
| 136 | Beispiel 43 | 2 |
| 137 | Beispiel 44 | 2 |
| 138 | Beispiel 46 | 2 |
| 139 | Beispiel 48 | 2 |
| 140 | Beispiel 50 | 2 |
| 141 | Beispiel 54 | 2 |
| 142 | Beispiel 58 | 2 |
| 143 | Beispiel 68 | 1 |
| 144 | Beispiel 68 | 1,5 |
| 145 | Beispiel 68 | 2 |
| 146 | Beispiel 70 | 2 |
| 147 | Beispiel 72 | 2 |
| 148 | Beispiel 74 | 2 |
| 149 | Beispiel 78 | 2 |

### Beispiel 150

16,8 g 2-Methoxy-4-nitroanilin wurden in 200 g Wasser vorgelegt und mit 30 g Salzsäure (konz.) versetzt. Anschließend wurden bei 0 - 10°C 32 ml einer 23 gew.-%igen Natriumnitritlösung innerhalb von 30 Minuten zugegeben. Nach 2 h wurde der Nitritüberschuß durch Zugabe von Amidosulfonsäure zerstört und die so hergestellte Diazokomponente zu der in Beispiel 1 hergestellten Kupplungskomponente innerhalb von 20 Minuten bei 15 - 20°C eingetragen. Durch gleichzeitige Zugabe von 20 ml 25 gew.-%iger Natronlauge wurde der pH bei 8 - 9 gehalten. Nach beendeter Kupplung wurden 75 g 50 gew.-%ige Natronlauge zudosiert. Bei 40 - 45°C wurden unter Rühren langsam 47,5 g einer 25 gew.-%igen Glucoselösung zugetropft. Nach beendeter Reaktion (DC-Kontrolle) wurde der Farbstoff durch Zugabe von 79 g Salzsäure (konz.) auf pH 5 gestellt und 6 h bei 60°C gerührt. Anschließend wurde durch Zugabe von 19 g Salzsäure (konz.) ein pH von 2,2 eingestellt und der Farbstoff nach Abkühlen der Suspension durch Filtration isoliert. Der so erhaltene Farbstoff der Formel 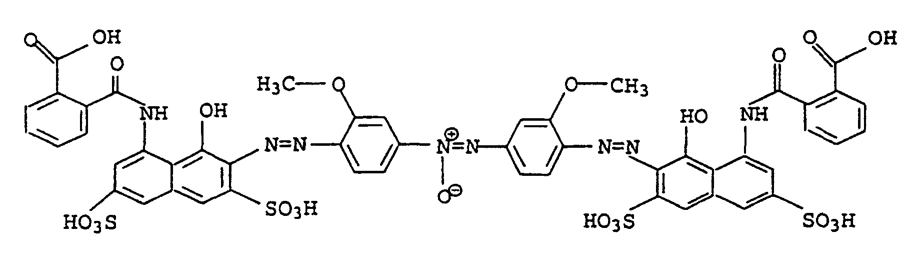 färbt Papier in einer blauen Nuance (λ_{max.} = 596 nm).

### Beispiel 151

1/5 des isolierten nach Beispiel 150 hergestellten Farbstoffs wurde in 155 g Wasser aufgeschlämmt, mit 5,5 g Diethanolamin und 2,25 g Kupfer(II)-sulfat-pentahydrat versetzt. Anschließend wurde der pH-Wert mit 10 gew.-%iger Natronlauge auf 8,5 - 9 gestellt. Danach wurde das Reaktionsgemisch 7 h bei 90°C bei diesem pH gerührt. Der so erhaltene Farbstoff färbt Papier in einer blauen Nuance (λ_{max.} = 606 nm).

### Beispiel 152

1/5 des isolierten nach Beispiel 150 hergestellten Farbstoffs wurde in 155 g Wasser aufgeschlämmt, mit 5,5 g Diethanolamin und 3,25 g Kupfer(II)-sulfat-pentahydrat versetzt. Anschließend wurde der pH-Wert mit 10 gew.-%iger Natronlauge auf 8,5 - 9 gestellt. Danach wurde das Reaktionsgemisch 7 h bei 90°C bei diesem pH gerührt. Der so erhaltene Farbstoff färbt Papier in einer blauen Nuance (λ_{max.} = 618 nm).

### Beispiel 153

2/5 des isolierten nach Beispiel 150 hergestellten Farbstoffs wurde in 310 g Wasser aufgeschlämmt, mit 11 g Diethanolamin und 8,5 g Kupfer(II)-sulfat-pentahydrat versetzt. Anschließend wurde der pH-Wert mit 10 gew.-%iger Natronlauge auf 8,5 - 9 gestellt. Danach wurde das Reaktionsgemisch 7 h bei 90°C bei diesem pH gerührt. Der so erhaltene Farbstoff färbt Papier in einer blauen Nuance (λ_{max.} = 626 nm).

### Beispiel 154

16,8 g 2-Methoxy-4-nitroanilin wurden in 150 g Wasser vorgelegt und mit 30 g Salzsäure (konz.) versetzt. Anschließend wurden bei 0-10°C 32 ml einer 23 gew.-%igen Natriumnitritlösung innerhalb von 30 Minuten zugegeben. Nach 2 h wurde der Nitritüberschuß durch Zugabe von Amidosulfonsäure zerstört und die so hergestellte Diazokomponente zu der in Beispiel 1 hergestellten Kupplungskomponente innerhalb von 30 Minuten bei 15-20°C eingetragen. Durch gleichzeitige Zugabe von 20 ml 25 gew.-%iger Natronlauge wurde der pH bei ca. 9 gehalten. Nach beendeter Kupplung wurden 40 g 50 gew.-%ige Natronlauge zudosiert. Bei 50-55°C wurden 12,3 g Glucose portionsweise zugegeben. Nach beendeter Reaktion (DC-Kontrolle) wurde durch Zugabe von 33 g Salzsäure (konz.) der pH auf 8 eingestellt und die Reaktionsmischung 2 h bei 90°C gerührt. Danach war die Amidspaltung beendet. Nach Abkühlen auf Raumtemperatur wurde der pH durch Zugabe von 5 g 50 gew.-%ige Natronlauge der pH auf 8 gestellt und der Farbstoff durch Filtration isoliert. Der so erhaltene Farbstoff färbt Papier in einer blauen Nuance. (λₘₐₓ = 598 nm)

### Beispiel 155

1/ 5 des isolierten nach Beispiel 154 hergestellten Farbstoffs wurde in 110 g Wasser aufgeschlämmt und mit 3,7 g Ethanolamin versetzt. Bei 50°C wurden 2,25 g Kupfer(II)-sulfat-pentahydrat, die in 25 g Wasser gelöst waren, zugegeben und die Reaktionsmischung 7 h bei 90°C bei pH 8,5-9,5 gerührt. Die so erhaltene Farbstoffmischung färbt Papier in einer blauen Nuance. (λₘₐₓ = 606 nm)

### Beispiel 156

1/ 5 des isolierten nach Beispiel 154 hergestellten Farbstoffs wurde in 97 g Wasser unter Zugabe von 13 g Harnstoff aufgeschlämmt und mit 3,7 g Ethanolamin versetzt. Bei 50°C wurden 2,25 g Kupfer(II)-sulfat-pentahydrat, die in 25 g Wasser gelöst waren, zugegeben und die Reaktionsmischung 7 h bei 90°C bei pH 8,5-9,5 gerührt. Die so erhaltene Farbstoffmischung färbt Papier in einer blauen Nuance. (λₘₐₓ = 608 nm)

### Beispiel 157

1/ 5 des isolierten nach Beispiel 154 hergestellten Farbstoffs wurde in 110 g Wasser aufgeschlämmt und mit 3,7 g Ethanolamin versetzt. Bei 50°C wurden 2,75 g Kupfer(II)-sulfat-pentahydrat, die in 25 g Wasser gelöst waren, zugegeben und die Reaktionsmischung 7 h bei 90°C bei pH 8,5-9,5 gerührt. Die so erhaltene Farbstoffmischung färbt Papier in einer blauen Nuance. (λₘₐₓ = 610 nm)

### Beispiel 158

1/ 5 des isolierten nach Beispiel 154 hergestellten Farbstoffs wurde in 97 g Wasser unter Zugabe von 13 g Harnstoff aufgeschlämmt und mit 3,7 g Ethanolamin versetzt. Bei 50°C wurden 2,75 g Kupfer(II)-sulfat-pentahydrat, die in 25 g Wasser gelöst waren, zugegeben und die Reaktionsmischung 7 h bei 90°C bei pH 8,5-9,5 gerührt. Die so erhaltene Farbstoffmischung färbt Papier in einer blauen Nuance. (λₘₐₓ = 610 nm)

## Patentansprüche

1. Azoxyfarbstoffe der allgemeinen Formel I in Form der freien Säure 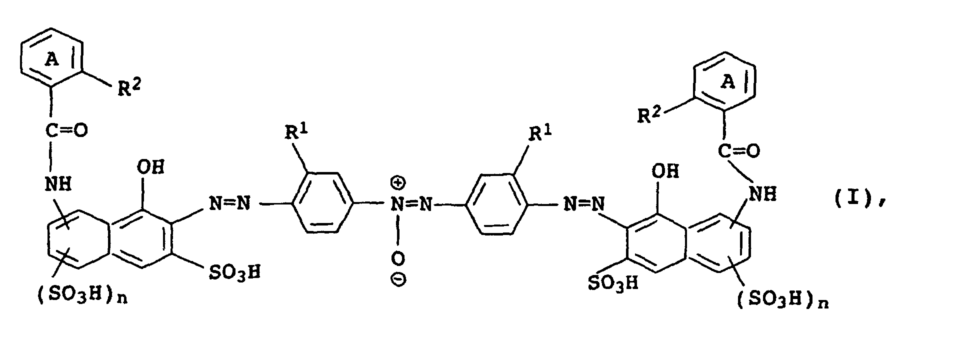 in der
n 0 oder 1
R¹ Methoxy, Hydroxyl und Carboxyl
R² Carboxyl, Amino, C₁-C₄-Alkylamino, Allylamino, Benzylamino und Methoxycarbonylmethylamino bedeuten und die Phenylringe A außerdem mit C₁-C₈-Alkyl, Phenyl, das mit Methyl oder Halogen substituiert sein kann, Hydroxyl, Amino, Nitro, Halogen, Carboxyl, N-Benzylcarbamoyl, unsubstituiertes oder mit Nitro, Halogen, C₁-C₄-Alkoxy, Acetoxy substituiertes Phenylcarbamoyl und Naphthylcarbamoyl substituiert sein können oder benzanelliert sein können.

2. Azoxyfarbstoffe nach Anspruch 1 der allgemeinen Formel VII in Form der freien Säure 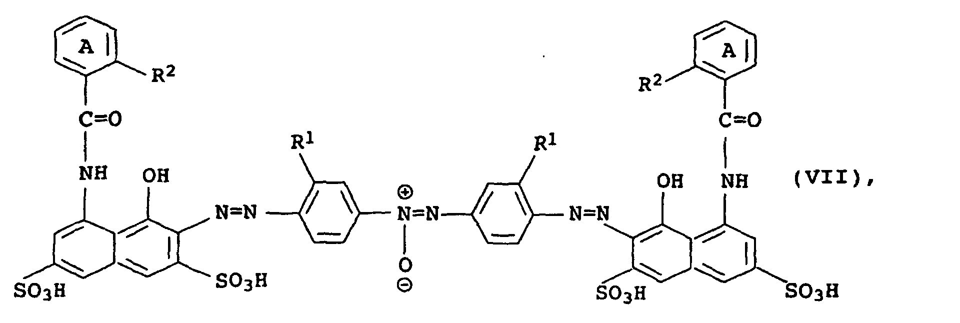 in der R¹, R² und A die in Anspruch 1 genannte Bedeutung haben.

3. Azoxyfarbstoffe nach Anspruch 1, in denen die Reste R¹ Methoxy bedeuten.

4. Azoxyfarbstoffe nach Anspruch 1, in denen die Phenylringe A unsubstituiert oder mit C₁-C₄-Alkyl substituiert sind.

5. Azoxyfarbstoffe nach Anspruch 1, in denen die Reste R² Carboxyl bedeuten.

6. Cu-Komplexfarbstoffe der allgemeinen Formel VI in Form der freien Säure 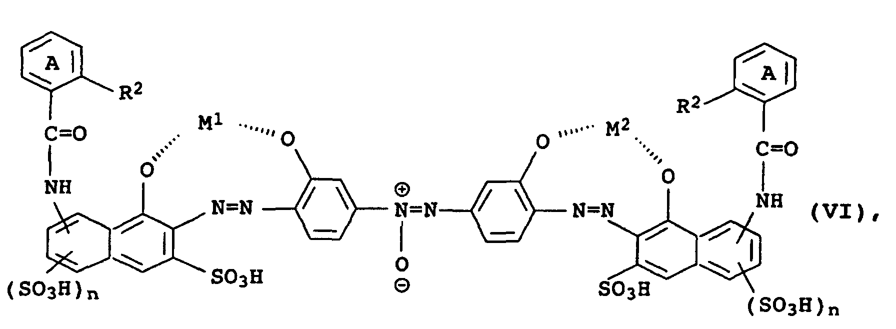 in der mindestens einer der Reste M¹ und M² für Kupfer(II) und der andere Rest gegebenenfalls für Wasserstoff und Methyl steht und n, R² und A die in Anspruch 1 genannte Bedeutung haben, und deren Mischungen.

7. Cu-Komplexfarbstoffe und deren Mischungen erhältlich durch Umsetzung der Farbstoffe gemäß Anspruch 1 mit mindestens 0,1 Moläquivalenten eines kupferabgebenden Mittels.

8. Verfahren zur Herstellung von Cu-Komplexfarbstoffen, indem man einen Azoxyfarbstoff gemäß Anspruch 1 mit mindestens 0,1 Moläquivalenten eines kupferabgebenden Mittels umsetzt.

9. Verwendung eines oder mehrerer Azoxyfarbstoffe und/oder deren Cu-Komplexe gemäß Anspruch 1 zum Färben oder Bedrucken von natürlichen oder synthetischen Substraten.

10. Natürliche oder synthetische Substrate, die mit einem oder mehreren Azoxyfarbstoffen und/oder deren Cu-Komplexe gemäß Anspruch 1 gefärbt oder bedruckt wurden.

11. Azoxyfarbstoffe der allgemeinen Formel VIII in Form der freien Säure 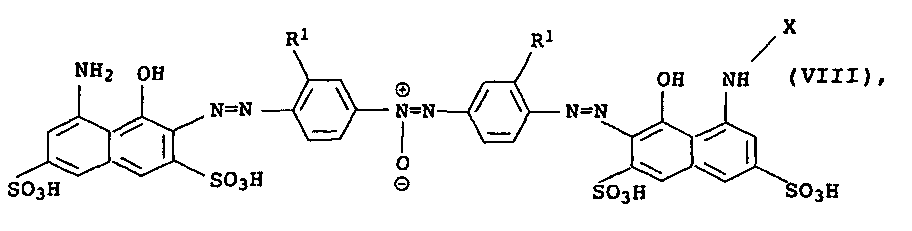 in der
X Wasserstoff oder einen Rest der Formel 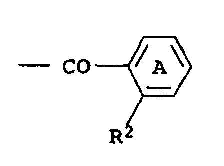
R¹ Methoxy und Hydroxyl
R² Carboxyl, Amino, C₁-C₄-Alkylamino, Allylamino, Benzylamino und Methoxycarbonylmethylamino bedeuten und der Phenylring A außerdem mit C₁-C₈-Alkyl, Phenyl, das mit Methyl oder Halogen substituiert sein kann, Hydroxyl, Amino, Nitro, Halogen, Carboxyl, N-Benzylcarbamoyl, unsubstituiertes oder mit Nitro, Halogen, C₁-C₄-Alkoxy, Acetoxy substituiertes Phenylcarbamoyl und Naphthylcarbamoyl substituiert sein kann oder benzanelliert sein kann.

12. Cu-Komplexfarbstoffe der allgemeinen Formel IX in Form der freien Säure 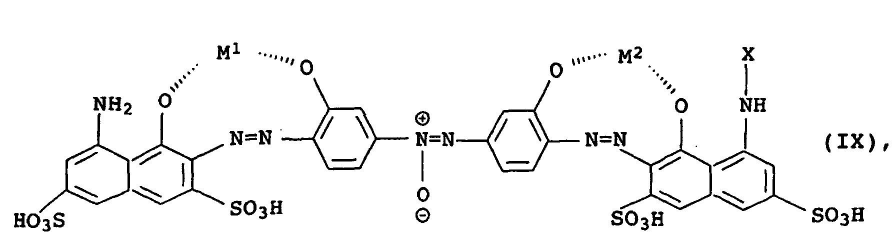 in der mindestens einer der Reste M¹ und M² für Kupfer(II) und der andere Rest gegebenenfalls für Wasserstoff und Methyl steht und X die in Anspruch 11 genannte Bedeutung hat, und deren Mischungen.

13. Verfahren zur Herstellung von Azoxyfarbstoffen der Formel VIII 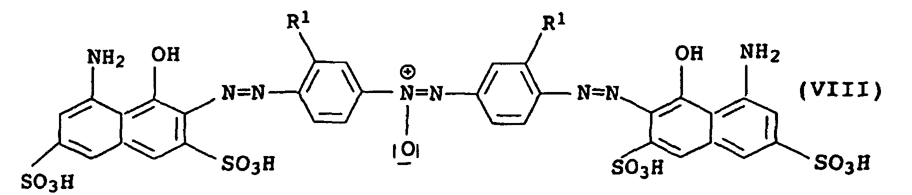 in der
R¹ Methoxy, Hydroxyl und Carboxyl bedeuten, **dadurch gekennzeichnet, daß** man eine Kupplungskomponente der Formel IV 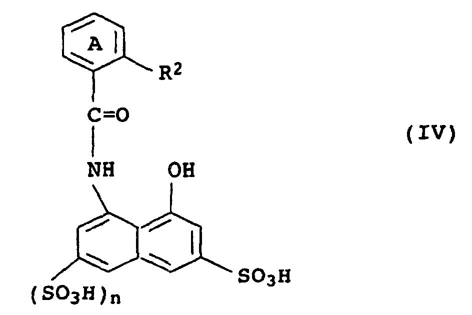
mit Nitroanilin der Formel V 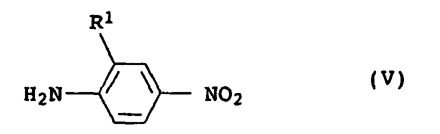 in denen n, A, R¹ und R² die in Anspruch 1 genannte Bedeutung haben, kuppelt, den erhaltenen Nitromonoazofarbstoff reduziert, wobei Dimerisierung stattfindet unter Ausbildung einer Azoxybrücke, und in wässriger Lösung bei pH < 9 entacyliert.

## Claims

1. Azoxy dyes of the general formula I in the form of the free acid 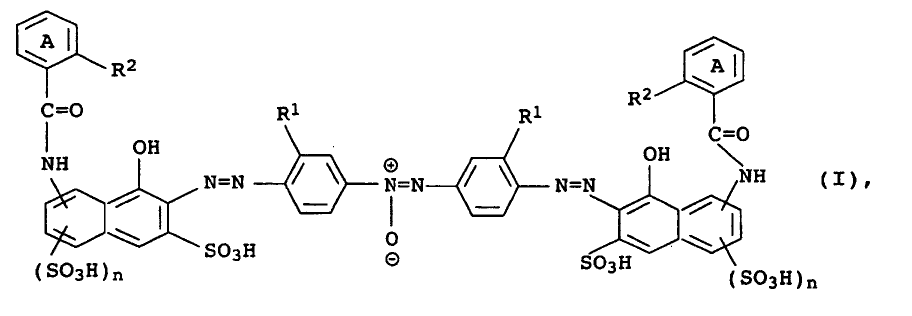 where
n is 0 or 1, each
R¹ is selected from the group consisting of methoxy, hydroxyl and carboxyl, each
R² is selected from the group consisting of carboxyl, amino, C₁-C₄-alkylamino, allylamino, benzylamino and methoxycarbonylmethylamino, and the phenyl rings A may additionally be substituted by C₁-C₈-alkyl, unsubstituted or methyl- or halogen-substituted phenyl, hydroxyl, amino, nitro, halogen, carboxyl, N-benzylcarbamoyl, unsubstituted or nitro-, halogen-, C₁-C₄-alkoxy- or acetoxy-substituted phenylcarbamoyl and naphthylcarbamoyl or be benzofused.

2. Azoxy dyes as claimed in claim 1 of the general formula VII in the form of the free acid 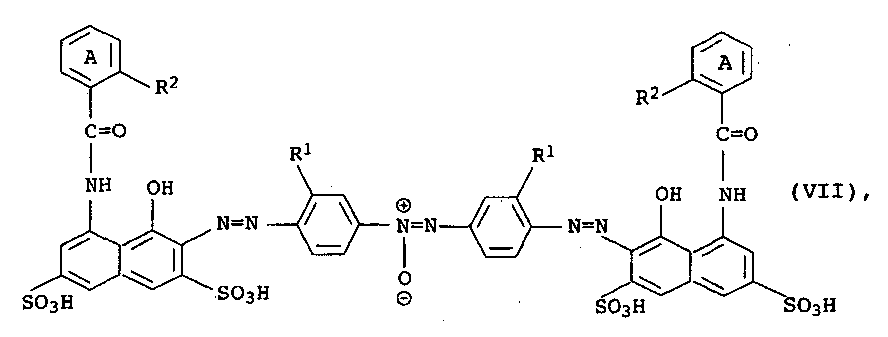 where R¹, R² and A are each as defined in claim 1.

3. Azoxy dyes as claimed in claim 1, wherein each R¹ is methoxy.

4. Azoxy dyes as claimed in claim 1, wherein the phenyl rings A are unsubstituted or C₁-C₄-alkyl-substituted.

5. Azoxy dyes as claimed in claim 1, wherein each R² is carboxyl.

6. Copper complex dyes of the general formula VI in the form of the free acid 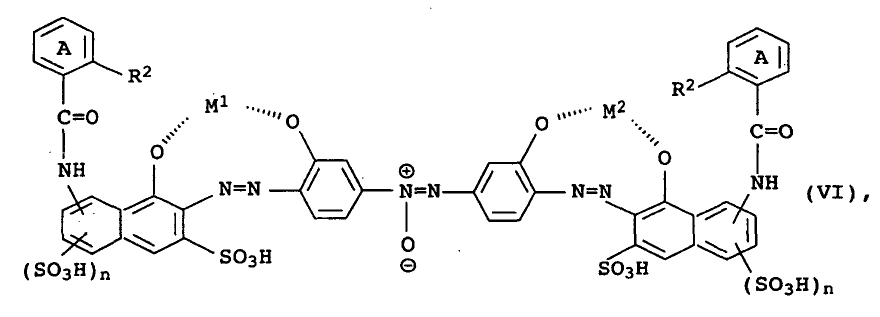 where at least one of M¹ and M² is copper(II) and any which is not is hydrogen and methyl, and n, R² and A are each as defined in claim 1, and mixtures thereof.

7. Copper complex dyes and their mixtures obtainable by reacting the dyes of claim 1 with at least 0.1 mol equivalent of a copper donor.

8. A process for preparing copper complex dyes, which comprises reacting an azoxy dye of claim 1 with at least 0.1 mol equivalent of a copper donor.

9. 'The use of one or more azoxy dyes and/or their copper complexes of claim 1 for dyeing or printing natural or synthetic substrates.

10. Natural or synthetic substrates dyed or printed with one or more azoxy dyes and/or their copper complexes of claim 1.

11. Azoxy dyes of the general formula VIII in the form of the free acid 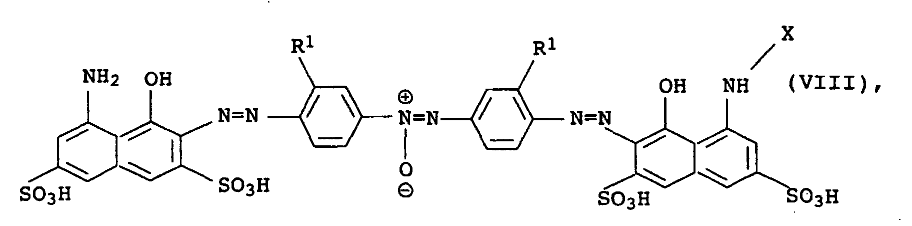 where
X is hydrogen or a radical of the formula 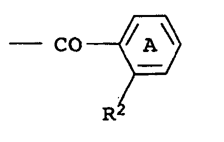
R¹ is selected from the group consisting of methoxy and hydroxyl,
R² is selected from the group consisting of carboxyl, amino, C₁-C₄-alkylamino, allylamino, benzylamino and methoxycarbonylmethylamino and the phenyl ring A may additionally be substituted by substituents selected from the group consisting of C₁-C₈-alkyl, unsubstituted phenyl, methyl-substituted phenyl, halogen-substituted phenyl, hydroxyl, amino, nitro, halogen, carboxyl, N-benzylcarbamoyl, unsubstituted or nitro-, halogen-, C₁-C₄-alkoxy- or acetoxy-substituted phenylcarbamoyl and naphthylcarbamoyl or may be benzofused.

12. Copper complex dyes of the general formula IX in the form of the free acid 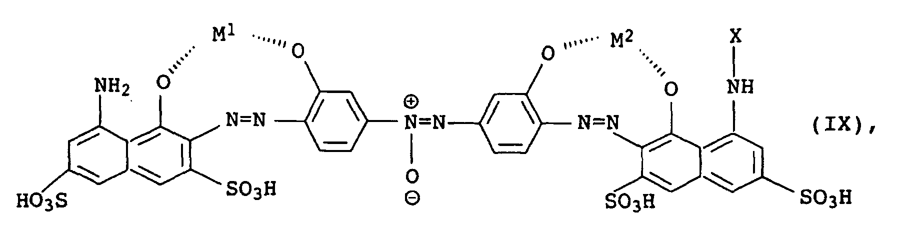 where at least one of M¹ and M² is copper(II) and any which is not is selected from the group consisting of hydrogen and methyl and X is as defined in claim 11, and mixtures thereof.

13. A process for preparing azoxy dyes of the formula VIII 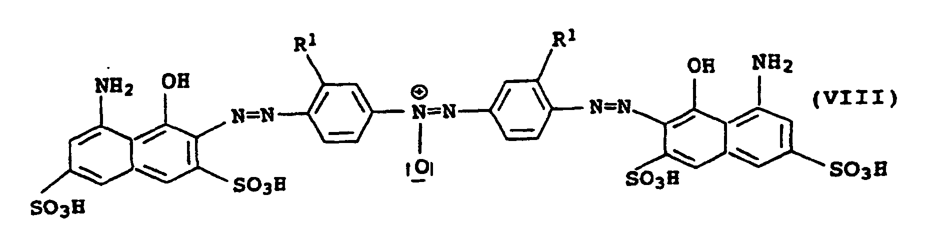 where
R¹ is selected from the group consisting of methoxy, hydroxyl and carboxyl, which comprises a coupling component of the formula IV 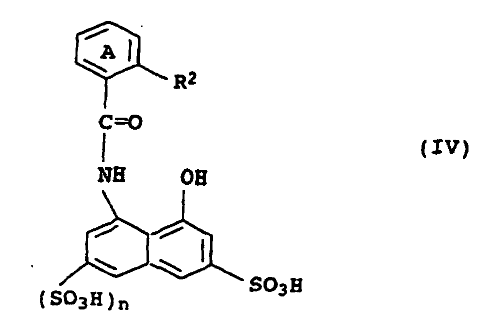
being coupled with nitroaniline of the formula V 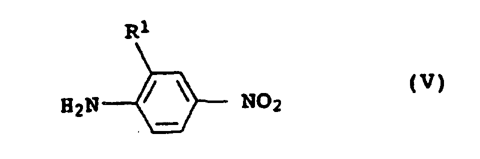 where n, A, R¹ and R² are each as defined in claim 1, and the nitromonoazo dye obtained being reduced, with dimerization taking place through formation of an azoxy bridge, and deacylated in an aqueous solution at a pH < 9.

## Revendications

1. Colorants azoxy de la formule générale 1, sous la forme de l'acide libre : 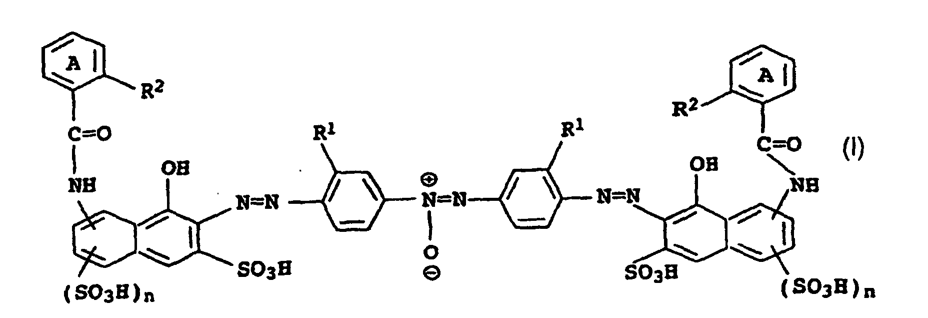 dans laquelle
n représente 0 ou 1,
R¹ est du méthoxy, de l'hydroxyle et du carboxyle,
R² représente du carboxyle, de l'amino, de l'alkylamino en C₁-C₄, de l'allylamino, du benzylamino et du méthoxycarbonylméthylamino, les noyaux phényle A pouvant, en outre, être benzocondensés ou substitués par de l'alkyle en C₁-C₈, du phényle qui peut être substitué par du méthyle ou de l'halogène, de l'hydroxyle, de l'amino, du nitro, de l'halogène, du carboxyle, du N-benrylcarbamoyle, du phénylcarbamoyle non substitué ou substitué par du nitro, de l'halogène, de l'alcoxy en C₁-C₄ ou de l'acétoxy, et du naphtylcarbamoyle.

2. Colorants azoxy suivant la revendication 1 de la formule générale VII, sous la forme de l'acide libre : 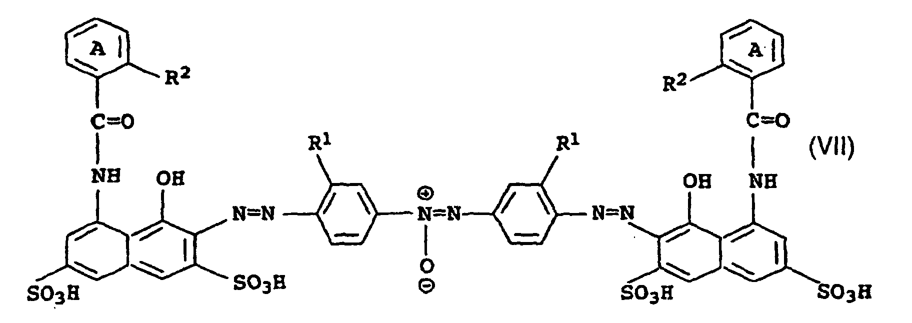 dans laquelle R¹, R² et A ont la même signification que dans la revendication 1.

3. Colorants azoxy suivant la revendication 1, dans lesquels les radicaux R¹ représentent du méthoxy.

4. Colorants azoxy suivant la revendication 1, dans lesquels les noyaux phényle A sont non substitués ou substitués par de l'alkyle en C₁-C₄.

5. Colorants azoxy suivant la revendication 1, dans lesquels les radicaux R² représentent du carboxyle.

6. Colorants à complexe de Cu de la formule générale VI, sous la forme de l'acide libre, 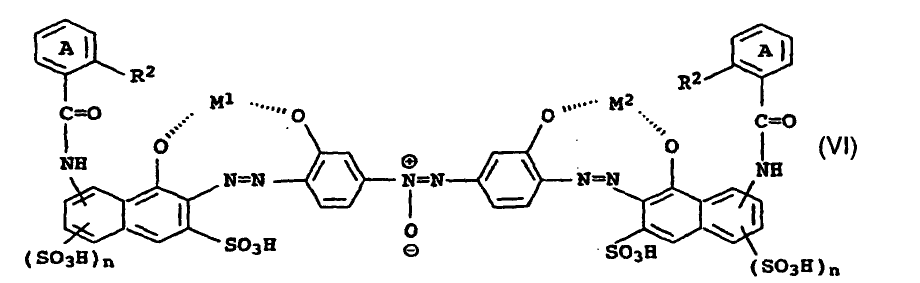 dans laquelle au moins un des radicaux M¹ et M² représente du cuivre(II) et l'autre radical éventuellement de l'hydrogène et du méthyle, et n, R² et A ont la signification indiquée dans la revendication 1, et leurs mélanges.

7. Colorants à complexe de Cu et leurs mélanges que l'on peut obtenir par réaction des colorants suivant la revendication 1 avec au moins 0,1 équivalent molaire d'un agent donneur de cuivre.

8. Procédé de préparation de colorants à complexe de Cu, dans lequel on fait réagir un colorant azoxy suivant la revendication 1 avec au moins 0,1 équivalent d'un agent donneur de cuivre.

9. Utilisation d'un ou de plusieurs colorants azoxy et/ou de leurs complexes de Cu suivant la revendication 1, pour colorer ou imprimer des substrats naturels ou synthétiques.

10. Substrats naturels ou synthétiques, qui sont colorés ou imprimés avec un ou plusieurs colorants azoxy et/ou leurs complexes de Cu suivant la revendication 1.

11. Colorants azoxy de la formule générale VIII, sous la forme de l'acide libre : 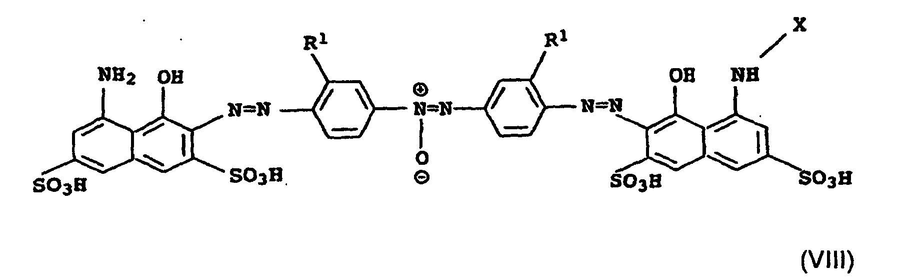 dans laquelle
X représente de l'hydrogène ou un radical de la formule : 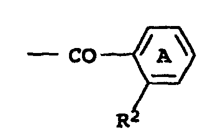
R¹ est du méthoxy ou de l'hydroxyle,
R² représente du carboxyle, de l'amino, de l'alkylamino en C₁-C₄, de l'allylamino, du benzylamino et du méthoxycarbonylméthylamino, le noyau phényle A pouvant en outre être benzocondensé ou substitué par de l'alkyle en C₁-C₈, du phényle qui peut être substitué par du méthyle ou de l'halogène, de l'hydroxyle, de l'amino, du nitro, de l'halogène, du carboxyle, du N-benzylcarbamoyle, du phénylcarbamoyle non substitué ou substitué par du nitro, de l'halogène, de l'alcoxy en C₁-C₄ ou de l'acétoxy, et du naphtylcarbamoyle.

12. Colorants à complexe de Cu de la formule générale IX, sous la forme de l'acide libre, 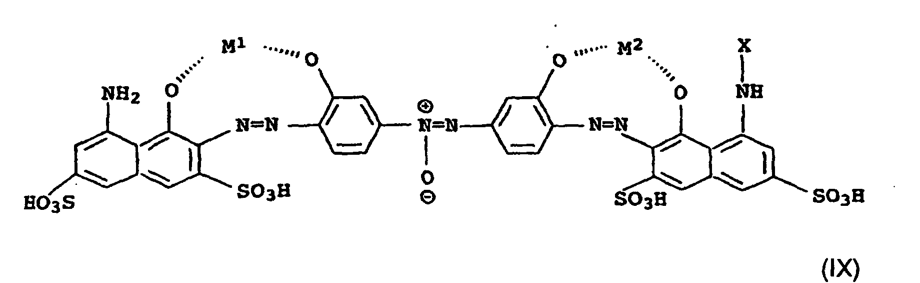 dans laquelle au moins un des radicaux M¹ et M² représente du cuivre(II) et l'autre radical éventuellement de l'hydrogène et du méthyle, et X a la signification indiquée dans la revendication 11, et leurs mélanges.

13. Procédé de préparation de colorants azoxy de la formule VIII : 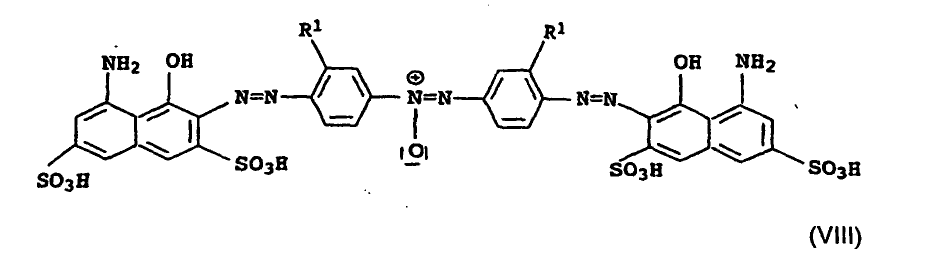 dans laquelle
R¹ représente du méthoxy, de l'hydroxyle et du carboxyle, **caractérisé en ce qu'**on couple un composant de couplage de la formule IV : 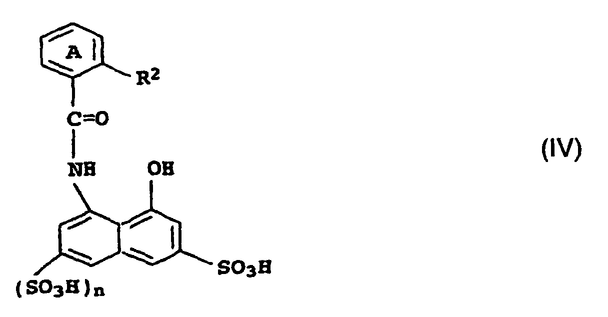
avec de la nitroaniline de la formule V : 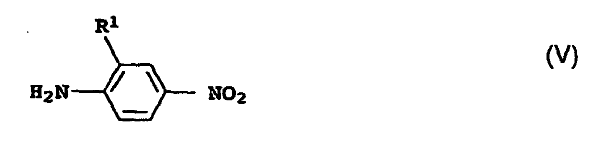 où n, A, R¹ et R² ont la signification indiquée dans la revendication 1, on réduit le colorant nitromonoazo obtenu, une dimérisation ayant lieu avec réalisation d'un pont azoxy, et on désacyle en solution aqueuse à pH < 9.
